(19) Europäisches Patentamt
European Patent Office
Office européen des brevets

(11) **EP 4 010 429 B1**

(12) **EUROPÄISCHE PATENTSCHRIFT**

(45) Veröffentlichungstag und Bekanntmachung des Hinweises auf die Patenterteilung:
**05.10.2022 Patentblatt 2022/40**

(21) Anmeldenummer: **20746684.8**

(22) Anmeldetag: **03.08.2020**

(51) Internationale Patentklassifikation (IPC):
***C08L 83/10*** *(2006.01)* ***C08G 77/445*** *(2006.01)*

(52) Gemeinsame Patentklassifikation (CPC):
(C-Sets verfügbar)
**C08L 83/10; C08L 23/04; C08L 23/10; C08L 75/04; C08L 77/02;** C08G 77/445; C08L 33/12 (Forts.)

(86) Internationale Anmeldenummer:
**PCT/EP2020/071781**

(87) Internationale Veröffentlichungsnummer:
**WO 2021/023701 (11.02.2021 Gazette 2021/06)**

(54) **VERZWEIGTE POLYESTERSILOXANE**
BRANCHED POLYESTER SILOXANES
POLYESTERSILOXANES RAMIFIÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2019 EP 19190670**

(43) Veröffentlichungstag der Anmeldung:
**15.06.2022 Patentblatt 2022/24**

(73) Patentinhaber: **Evonik Operations GmbH**
**45128 Essen (DE)**

(72) Erfinder:
- **LEHMANN, Kathrin**
  **51377 Leverkusen (DE)**
- **HENNING, Frauke**
  **45259 Essen (DE)**
- **BUSCH, Stefan**
  **44879 Bochum (DE)**
- **NAWRACALA, Angela**
  **51469 Bergisch Gladbach (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 2 404 950 WO-A1-2017/191603**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 010 429 B1

(52) Gemeinsame Patentklassifikation (CPC): (Forts.)

C-Sets
**C08L 23/04, C08L 83/10;**
**C08L 23/10, C08L 83/10;**
**C08L 75/04, C08L 83/10;**
**C08L 77/02, C08L 83/10;**
C08L 33/12, C08L 83/10

## Beschreibung

Die vorliegende Erfindung betrifft die Verwendung von polyestermodifizierten, verzweigten Organosiloxanen als Kunststoffadditive; entsprechende Kunststoffzusammensetzungen umfassend mindestens ein Kunststoffadditiv (A) ausgewählt aus polyestermodifizierten, verzweigten Organosiloxanen und mindestens einen Kunststoff (B); Formmassen oder Formkörper, die diese Kunststoffzusammensetzung enthalten; sowie die zahlreichen Verwendungen der Kunststoffzusammensetzung, der Formmassen und der Formkörper.

Kunststoffadditive sind aus dem Stand der Technik bekannt. Sie werden zur Verbesserung der Eigenschaften von Kunststoffzusammensetzungen oder zur Erleichterung der Herstellung bzw. Verarbeitung von Kunststoffzusammensetzungen eingesetzt. Als besonders vorteilhaft hat sich die Verwendung von Organosiloxanen erwiesen. Die chemische Struktur der Organosiloxane spielt bei der Wirkung der Organosiloxane dabei eine entscheidende Rolle. Es ist aus dem Stand der Technik beispielsweise bekannt, dass Organosiloxane, die Polyester- oder Polyethergruppen tragen, sogenannte polyester- bzw. polyethermodifizierte Organosiloxane, besonders vorteilhaft sind.

WO 86/04072 A1 offenbart beispielsweise Polysiloxan-Polylacton-Blockcopolymere, bei denen die Polyesterreste an der $\alpha,\omega$-Position eines linearen, also unverzweigten Polysiloxans gebunden sind. Es werden Vorteile bei der Oberflächenmodifizierung unterschiedlicher Thermoplaste im Sinne eines Antiblocking-Effekts offenbart. Die erhaltenen Produkte werden als Precursor für thermoplastische Elastomere oder als mit Anhydriden härtbare Materialien in Epoxiden beschrieben.

EP 1640418 A1 offenbart die Verwendung von organomodifizierten Polysiloxanen zur Verbesserung der Oberflächenvergütung, Kratzbeständigkeit und des Abriebwiderstandes von thermoplastischen Elastomeren. Dabei handelt es sich um vergleichsweise weiche Kunststoffe. Als thermoplastische Elastomere werden beispielsweise Polyurethane (TPU), Copolyester (TPEE/COPE) und Styrenole (TPE-S) sowie Polyamide (PEBA), Polyolefinmischungen (TPO), und Polyolefinlegierungen (TPV) genannt. Als organomodifizierte Polysiloxanen werden ausschließlich polyethermodifizierte Organosiloxane beschrieben. Polyethermodifizierte Organosiloxane haben gegenüber polyestermodifzierten Organosiloxanen mehrere Nachteile. So zeigen polyethermodifizierte Organosiloxane in der Regel eine geringere Temperaturstabilität. Im Falle von höheren Verarbeitungstemperaturen, wie sie beispielsweise bei der Verarbeitung von Polymethylmethacrylat (PMMA) erforderlich sind, kann es daher zu unerwünschten Verfärbungen/Vergilbungen kommen. Des Weiteren führen polyethermodifizierte Organosiloxane zu einer Erhöhung der Opazität von Kunststoffzusammensetzungen. Dies ist insbesondere nachteilig bei hochtransparenten PMMA-Zusammensetzungen. Polyethermodifizierte Organosiloxane lassen sich zudem nicht bei der Herstellung von polyolefinbasierten Folien einsetzen, da üblicherweise keine glatten Folien erhalten werden können, was sich bereits bei geringen Additivierungen von 0,5 Gew.-% zeigt. Auch hier tritt häufig Vergilbung auf in Polyolefinfolien.

WO 2012/034821 A1 offenbart Polyestersiloxane, bei denen die Polyesterreste an der $\alpha,\omega$-Position oder seitenständig an einem linearen, und somit unverzweigten Polysiloxan gebunden sind. Diese Polyestersiloxane werden ebenfalls zur Oberflächenmodifizierung im Sinne einer Verbesserung der Wischbeständigkeit von eingefärbten Poly(alkyl)(meth)acrylat-Matrixmaterialien eingesetzt. Die verbesserte Wischbeständigkeit, geht dabei aber mit dem Nachteil der Reduktion der Vicat-Erweichungstemperatur einher. Es wird insbesondere die Verwendung von kommerziell erhältlichen Kunststoffadditiven wie TEGOMER® H-Si 6440 P, einem entsprechenden polyestermodifiziertes Organosiloxan, sowie TEGOPREN® 6846, einem alkylmodifizierten Organosiloxan, beschrieben. Diese sollen in eingefärbten, insbesondere schwarzen Formmassen zu einem reduzierten oder sogar keinem Grauschleier führen, zumindest nach visueller Beurteilung der Proben.

WO 2011/129596 A1 beschreibt ebenfalls Polyestersiloxane, bei denen die Polyesterreste an der $\alpha,\omega$-Position eines linearen, also unverzweigten, Polysiloxans gebunden vorliegen. Diese Polyestersiloxane werden zur Verbesserung der Kratzfestigkeit von Polymethylmethacrylat (PMMA), welches zusätzlich Schlagzähmodifizierer enthält, eingesetzt. Es wird eine verbesserte Schlagzähigkeit der Kunststoffzusammensetzung als kombinierter Effekt des Schlagzähmodifizierers und des eingesetzten Organosiloxans TEGOMER® H-Si 6440 P beschrieben.

Das Dokument WO 2017/191603 betrifft Polymere, die als Additive für Kunststoffe verwendet werden können. Im Beispiel 7 offenbart es die Verwendung von Silmer OHC50, das seitenständige OH-Gruppen trägt. Dieses Polymer ist mit einem Lactid umgestzt. Das resultierende Produkt ist kammärtig und deshalb kein verzweigtes Polysiloxan.

Als besonders vorteilhaft für die Oberflächenmodifikation von Kunststoffzusammensetzungen, insbesondere zur Verbesserung ihrer Kratzfestigkeit, Wischbeständigkeit oder Schlägzähigkeit werden also im Stand der Technik lineare, in $\alpha,\omega$-Position polyestermodifizierte Organosiloxane beschrieben, insbesondere TEGOMER® H-Si 6440 P. Allerdings zeigt sich, dass ihr Einsatz in zahlreichen Kunststoffen, wie z.B. Polymethylmethacrylat (PMMA), Polycarbonat (PC), Polyurethan (TPU), Polyethylenterephthalat (PET) oder auch Polyethylen (PE), zur Eintrübung, also einer Erhöhung der Opazität bzw. Verringerung der Transparenz, führt oder auch zu anderen der vorbenannten Nachteile, wie z.B. zu einer Reduktion der Erweichungstemperatur. Zudem wird bei diesen Organosiloxanen zwar eine verbesserte, aber immer noch messbare Reduktion der Farbtiefe von schwarzen Compounds auf Basis von PC oder auch PMMA beobachtet.

Es bestand also weiterhin ein Bedarf an Kunststoffadditiven, die sowohl die Oberflächen- als auch die Bulkeigenschaften von Kunststoffen positiv modifizieren können und durch eine verbesserte Kompatibilität mit dem Kunststoff erlauben, transparente oder in dunklen Farbtönen eingefärbte Kunststoffe mit hohem Glanz zuzulassen.

Es bestand insbesondere weiterhin ein Bedarf an Kunststoffadditiven für Hochleistungskunststoffe, die ohne Reduktion der Erweichungstemperatur (Vicat) eine verbesserte Fließfähigkeit sowie Kratz- und Wischbeständigkeit in Poly(alkyl)(meth)acrylaten, Polyethylenterephthalaten und Polycarbonaten ermöglichen.

Es bestand darüber hinaus ein Bedarf an Kunststoffadditiven, die in Hochleistungskunststoffen auf Basis von Polymeren, die Ester- oder Amidgruppen aufweisen, wie beispielsweise Polyester (z.B. Polybutylenterephthalat (PBT), Polyethylenterephthalat (PET)), Polycarbonate (PC) oder Polyamide (PA) (z.B. PA 6, PA 6.6, PA 4.6, PA 11, PA 12, Polyphthalamide (PPAs)), nicht zu einer Umesterung oder Umamidierung führen. Dies kann zu einer reduzierten Erweichungstemperatur oder verschlechterten mechanischen Eigenschaften, wie einer reduzierten Schlagzähigkeit, führen. Umesterungs- oder Umamidierungsreaktionen sind häufig auch in der DSC (Differential Scanning Calorimetry) ersichtlich. Eine Stabilität gegenüber unerwünschten Abbauprozessen ist also gewünscht.

Durch die Überwindung der vorgenannten Nachteile können neuartige Automobilapplikationen adressiert werden, wie sie insbesondere in der Elektromobilität erforderlich sind, um Batterien oder Strukturelemente zu spritzen. Es lassen sich auch E+E-Applikationen (elektrische und elektronische Applikationen) adressieren, beispielsweise Kühlkörper (heat sinks) als Metallersatz für elektronische Bauteile, befüllt mit Epoxidharzen, Polyurethanen oder Silikonen. In E+E-Applikationen sind dabei nicht nur gute mechanische Eigenschaften gefordert, die Kunststoffzusammensetzungen sollen auch eine ausreichende Kriechstromfestigkeit (Comparative Tracking Index, CTI) zeigen, damit Kurzschlüsse bei niedrigen Spannungen vermieden werden können, und zudem auch über eine hohe Flammfestigkeit verfügen.

Keines der vorbenannten Dokumente des Stands der Technik beschreibt die Verwendung von Organosiloxanen zur Verbesserung der Flammfestigkeit, wie sie beispielsweise durch die europäische Transportnorm EN 45545 oder die Baurichtlinienausführung CPR gefordert wird, die neben einer Flammfestigkeit gemäß UL 94 auch eine reduzierte Rauchgasdichte und verspätete Hitzefreisetzung verlangen.

Die Aufgabe der vorliegenden Erfindung war es, zumindest einen Nachteil des Standes der Technik zu überwinden.

Es bestand insbesondere die Aufgabe, entsprechend verbesserte Kunststoffzusammensetzungen bereitzustellen. Vorzugsweise sollten Kunststoffzusammensetzungen bereitgestellt werden, die je nach Einsatzgebiet, mindestens eine der folgenden Verbesserungen zeigen:

- verbesserte mechanische Eigenschaften, wie beispielsweise eine verbesserte Schlagzähigkeit
- verbesserte Oberflächeneigenschaften, wie beispielsweise Kratz- oder Wischbeständigkeit (Scheuerbeständigkeit);
- verbesserte thermische Eigenschaften, beispielsweise eine hohe Erweichungstemperatur oder eine verbesserte Fließfähigkeit;
- verbesserte optische Eigenschaften, beispielsweise einen verbesserten Glanz, eine verbesserte Transparenz, einen geringen Grauschleier oder eine verbesserte Farbtiefe;
- eine verbesserte Stabilität gegenüber unerwünschten Abbauprozessen;
- verbesserte elektrische Eigenschaften, beispielsweise eine ausreichende Kriechstromfestigkeit;
- verbesserte Flamm- und Brandeigenschaften, beispielsweise eine verbesserte Flammfestigkeit, reduzierte Rauchgasdichte oder verspätete Hitzefreisetzung.

Weitere nicht explizit genannte Aufgaben ergeben sich aus dem Gesamtzusammenhang der nachfolgenden Beschreibung, Beispiele und Ansprüche.

Überraschenderweise wurde nun gefunden, dass eine Kunststoffzusammensetzung umfassend

- mindestens ein Kunststoffadditiv (A) ausgewählt aus polyestermodifizierten, verzweigten Organosiloxanen;
- mindestens einen Kunststoff (B).

diese Aufgabe löst.

Überraschenderweise wurde dabei festgestellt, dass die Kunststoffadditive (A) der vorliegenden Erfindung mit ihrem neuartigen Strukturelement der Verzweigung im Siloxangerüst und gegebenenfalls auch einer zusätzlichen Verzweigung im Polyesterrest Eigenschaften vermitteln, wie sie durch endständig modifizierte (also in $\alpha,\omega$-Position modifizierte) oder seitenständig modifizierte, lineare Polyestersiloxane ohne Verzweigung im Siloxangerüst, nicht erreicht werden können.

Gelöst wurde die Aufgabe der vorliegenden Erfindung daher durch die Gegenstände der unabhängigen Ansprüche. Vorteilhafte Ausgestaltungen der Erfindung sind in den nachgeordneten Ansprüchen, den Beispielen und der Beschreibung angegeben.

Die erfindungsgemäßen Gegenstände werden nachfolgend beispielhaft beschrieben, ohne dass die Erfindung

auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei einem Druck von 101325 Pa (Normaldruck).

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern nicht anders angegeben. Bereichsangaben schließen die Bereichsgrenzen X und Y also mit ein, sofern nicht anders angegeben.

Die Bezeichnungen "polyestermodifiziertes Siloxan", "polyestermodifiziertes Organosiloxan" und "Polyestersiloxan" werden im Rahmen der vorliegenden Erfindung synonym verwendet.

Wo immer Moleküle beziehungsweise Molekülfragmente ein oder mehrere Stereozentren aufweisen oder aufgrund von Symmetrien in Isomere unterschieden werden können oder aufgrund anderer Effekte, wie zum Beispiel eingeschränkter Rotation, in Isomere unterschieden werden können, sind alle möglichen Isomere von der vorliegenden Erfindung miteingeschlossen.

Das Wortfragment "Poly" umfasst im Zusammenhang mit dieser Erfindung nicht nur ausschließlich Verbindungen mit zumindest 2, insbesondere 3 Wiederholungseinheiten eines oder mehrerer Monomere im Molekül, sondern vorzugsweise auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die verschiedenen Fragmente in den nachfolgenden Formeln können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinanderfolgen können.

Die nachfolgenden Formeln beschreiben Verbindungen, die aus Wiederholungseinheiten aufgebaut sind, wie beispielsweise sich wiederholende Fragmente, Blöcke oder Monomereinheiten, und eine Molgewichtsverteilung aufweisen können. Die Häufigkeit der Wiederholungseinheiten wird durch Indizes angegeben. Die in den Formeln verwendeten Indizes, insbesondere sind als statistische Mittelwerte (Zahlenmittel) zu betrachten. Die verwendeten Indexzahlen sowie die Wertbereiche der angegebenen Indizes werden also Mittelwerte der möglichen statistischen Verteilung der tatsächlichen vorhandenen Strukturen und/oder deren Mischungen verstanden. Die Indizes sind somit bei Reinstoffen ganzzahlig und bei Mischungen in der Regel gebrochenzahlig.

Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Ein erster Gegenstand der Erfindung ist eine Kunststoffzusammensetzung umfassend

- mindestens ein Kunststoffadditiv (A) ausgewählt aus polyestermodifizierten, verzweigten Organosiloxanen; und
- mindestens einen Kunststoff (B).

Der Kunststoff (B) ist dabei verschieden vom Kunststoffadditiv (A). Die Kunststoffzusammensetzung enthält also sowohl mindestens ein Kunststoffadditiv (A) also auch mindestens einen davon unterschiedlichen Kunststoff (B).

Ein weiterer Gegenstand der Erfindung ist entsprechend auch die Verwendung von polyestermodifizierten, verzweigten Organosiloxanen als Kunststoffadditiv.

Unter einem Organosiloxan wird eine Verbindung verstanden, die an Siliziumatome gebundene organische Reste sowie Struktureinheiten der Formel ≡Si-O-Si≡ aufweist, wobei "≡" für die drei verbleibenden Valenzen des betrachteten Siliziumatoms steht. Die Organosiloxane sind dabei vorzugsweise aus Einheiten ausgewählt aus der Gruppe bestehend aus M = $[R_3SiO_{1/2}]$, D = $[R_2SiO_{2/2}]$ und T = $[RSiO_{3/2}]$ zusammengesetzt, und weisen optional zusätzlich Einheiten der Formel Q = $[SiO_{4/2}]$ auf, wobei R für einen einwertigen organischen Rest steht. Die Reste R können dabei jeweils unabhängig voneinander gewählt werden und sind im paarweisen Vergleich gleich oder unterschiedlich. Lineare Organosiloxane sind aus zwei M-Einheiten und gegebenenfalls zusätzlichen D-Einheiten zusammengesetzt, enthalten

aber keine T- oder Q-Einheiten. Verzweigte Organosiloxane dagegen enthalten neben M-Einheiten und gegebenenfalls zusätzlichen D-Einheiten zwingend mindestens eine T-Einheit oder Q-Einheit. Als Referenz zu der verwendeten M-, D-, T-, Q-Nomenklatur zur Beschreibung der Einheiten von Organosiloxanen sei W. Noll, Chemie und Technologie der Silicone, Verlag Chemie GmbH, Weinheim (1960), Seite 2 ff. angeführt. Polyestermodifizierte Organosiloxane zeichnen sich dadurch aus, dass mindestens ein Rest R einen Polyesterrest umfasst, also einen Rest mit mindestens zwei Carbonsäureestergruppen.

Es ist dabei bevorzugt, dass das mindestens eine Kunststoffadditiv (A) ausgewählt ist aus Verbindungen der Formel (1),

$M_m D_d T_t Q_q$ Formel (1);

mit

$M = [R_3SiO_{1/2}]$;
$D = [R_2SiO_{2/2}]$;
$T = [RSiO_{3/2}]$;
$Q = [SiO_{4/2}]$;
worin

R jeweils unabhängig voneinander ausgewählt ist aus der Gruppe bestehend aus $R^{(I)}$ und $R^{(II)}$;
wobei $R^{(I)}$ jeweils unabhängig voneinander ausgewählt ist aus einbindigen Kohlenwasserstoffresten;
$R^{(II)}$ jeweils unabhängig voneinander ausgewählt ist aus einbindigen organischen Resten, die jeweils einen oder mehrere Polyesterreste tragen;

wobei weiterhin gilt:

$$m = 2+t+2*q \geq 3;$$

$$d \geq 0;$$

$$t \geq 0;$$

$$q \geq 0;$$

mit der Maßgabe, dass mindestens ein Rest $R^{(II)}$ enthalten ist.

Es ist weiterhin bevorzugt, dass das Kunststoffadditiv (A) ausgewählt ist aus Verbindungen der Formel (2),

$Mm D_d T_t Q_q$ Formel (2);

mit

$M = [R_3SiO_{1/2}]$;
$D = [R_2SiO_{2/2}]$;
$T = [RSiO_{3/2}]$;
$Q = [SiO_{4/2}]$;
worin

R jeweils unabhängig voneinander ausgewählt ist aus der Gruppe bestehend aus $R^{(I)}$ und $R^{(II)}$;
wobei $R^{(I)}$ jeweils unabhängig voneinander ausgewählt ist aus einbindigen Kohlenwasserstoffresten;
$R^{(II)}$ jeweils unabhängig voneinander ausgewählt ist aus einbindigen organischen Resten, die jeweils einen oder mehrere Polyesterreste tragen;

wobei weiterhin gilt:

m = 2+t+2*q = 3 bis 60, vorzugsweise 3 bis 20, insbesondere 3 bis 10;
d = 0 bis 120, vorzugsweise 10 bis 50, insbesondere 15 bis 40;
t = 0 bis 10, vorzugsweise 1 bis 7, insbesondere 1 bis 5;
q = 0 bis 10, vorzugsweise 0 bis 5, insbesondere 0 bis 1;

mit der Maßgabe, dass das Organosiloxan mindestens einen, vorzugsweise 2 bis 10, insbesondere 3 bis 7 Reste $R^{(II)}$ aufweist.

Es ist weiterhin bevorzugt, dass das Kunststoffadditiv (A) ausgewählt ist aus Verbindungen der Formel (3),

$$M^1_{m1}M^2_{m2}D^1_{d1}D^2_{d2}T_tQ_q \qquad \text{Formel (3);}$$

mit

$M^1 = [R^1_3SiO_{1/2}]$;
$M^2 = [R^2R^1_2SiO_{1/2}]$;
$D^1 = [R^1_2SiO_{2/2}]$;
$D^2 = [R^1R^2SiO_{2/2}]$;
$T = [R^1SiO_{3/2}]$;
$Q = [SiO_{4/2}]$;
worin

$R^1$ jeweils unabhängig voneinander ausgewählt ist aus Kohlenwasserstoffresten mit 1 bis 30 Kohlenstoffatomen,
$R^2$ jeweils unabhängig voneinander ausgewählt ist aus einbindigen organischen Resten der Formel (4), $-R^3-(O-R^4)_p$ Formel (4);
$R^3$ jeweils unabhängig voneinander ausgewählt ist aus (p+1)-bindigen organischen Resten mit 2 bis 10 Kohlenstoffatomen;
$R^4$ jeweils unabhängig voneinander ausgewählt ist aus einbindigen Polyesterresten mit 4 bis 1000 Kohlenstoffatomen,
m1 = 0 bis 30, vorzugsweise 0 bis 10, insbesondere 0 bis 3;
m2 = 0 bis 30, vorzugsweise 0 bis 10, insbesondere 0 bis 7;
d1 = 0 bis 100, vorzugsweise 10 bis 40, insbesondere 24 bis 34;
d2 = 0 bis 20, vorzugsweise 0 bis 10, insbesondere 0 bis 3;
t = 0 bis 10, vorzugsweise 1 bis 7, insbesondere 1 bis 5;
q = 0 bis 10, vorzugsweise 0 bis 5, insbesondere 0 bis 1;
p = 1 bis 4, vorzugsweise 1 bis 3, insbesondere 1 bis 2;

mit der Maßgabe, dass gilt:

m1+m2 = 2+t+2*q = 3 bis 60, vorzugsweise 3 bis 20, insbesondere 3 bis 10;
m2+d2 = mindestens 1, vorzugsweise 2 bis 10, insbesondere 3 bis 7.

Es ist dabei besonders bevorzugt, dass gilt: m1 = 0. Es weiterhin besonders bevorzugt, dass gilt: m2 ≥ 3.

Vorzugsweise gilt für die Verbindungen der Formel (3) weiterhin, dass

$R^4$ jeweils unabhängig voneinander ausgewählt ist aus Polyesterresten der Formeln (5a) oder (5b),

$$-[(C{=}O)-R^5-O-]_kR^6 \qquad \text{Formel (5a),}$$

$$-[(C{=}O)-R^5-(C{=}O)-O-R^5-O-]_{(k/2)}R^6 \qquad \text{Formel (5b),}$$

wobei

$R^5$ jeweils unabhängig voneinander ausgewählt ist aus zweibindigen Kohlenwasserstoffresten mit 2 bis 10 Kohlenstoffatomen;
$R^6$ jeweils unabhängig voneinander ausgewählt ist aus der Gruppe bestehend aus H, Alkylresten mit 1 bis 4 Kohlenstoffatomen und Acylresten mit 1 bis 4 Kohlenstoffatomen;

k = 2 bis 50, vorzugsweise 4 bis 40, insbesondere 6 bis 30.

Besonders bevorzugt ist, dass die Reste $R^4$ jeweils unabhängig voneinander ausgewählt ist aus Polyesterresten der Formel (5a).

Die Polyesterreste können aus gleichen oder unterschiedlichen Ausgangsmolekülen aufgebaut sein. Vorzugsweise sind die Polyesterreste aus gleichen Ausgangsmolekülen aufgebaut. Die Ausgangsmoleküle sind vorzugsweise ausgewählt aus der Gruppe bestehend aus Verbindungen mit mindestens einer Carboxylgruppen sowie mindestens einer Hydroxylgruppe (Hydroxycarbonsäuren), Lactonen, organischen Verbindungen mit mindestens zwei Carboxylgruppen und organischen Verbindungen mit mindestens zwei Hydroxylgruppen.

Es ist bevorzugt, dass die Polyesterreste auf Hydroxycarbonsäuren (oder den entsprechenden Lactonen) basieren, ausgewählt aus der Gruppe bestehend aus Glycolsäure, Milchsäure, 3-Hydroxypropionsäure, 2-Hydroxybuttersäure, 3-Hydroxybuttersäure, 4-Hydroxybuttersäure, 2-Hydroxyisobuttersäure, 3-Hydroxyisobuttersäure, 2-Hydroxy-Valeriansäure, 3-Hydroxy-Valeriansäure, 4-Hydroxy-Valeriansäure, 5-Hydroxy-Valeriansäure, 2-Hydroxy-Capronsäure, 3-Hydroxy-Capronsäure, 4-Hydroxy-Capronsäure, 5-Hydroxy-Capronsäure, 6-Hydroxy-Capronsäure, 6-Hydroxy-2,2,4-Trimethylcaprosäure; vorzugsweise 5-Hydroxy-Valeriansäure, 6-Hydroxy-Capronsäure und/oder 6-Hydroxy-2,2,4-Trimethylcaprosäure, insbesondere 5-Hydroxy-Capronsäure.

Es ist bevorzugt, dass 5 % bis 50 %, vorzugsweise 5 % bis 40 %, insbesondere 5 % bis 25 % der Siliziumatome des Kunststoffadditivs (A) einen oder mehrere Polyesterreste tragen. Die Angabe, dass ein bestimmter Prozentsatz der Siliziumatome eines Organosiloxans in bestimmter Weise substituiert sind, bezieht sich auf den molaren Anteil aller Siliziumatome im numerischen statistischen Mittel aller Moleküle in der jeweiligen Komponente, falls nicht anders angegeben. Der Anteil der Siliziumatome des Kunststoffadditivs (A), die einen oder mehrere Polyesterreste tragen, ist bei Verbindungen der Formel (3) beispielsweise durch den Quotienten (m2+d2) / (m1+m2+d1+d2+t+q) gegeben.

Es ist bevorzugt, dass der Rest $R^3$ in Formel (4) aus zwei Kohlenwasserstoffresten $R^{(a)}$ und $R^{(b)}$ sowie einem Sauerstoffatom besteht, wobei $R^{(a)}$ und $R^{(b)}$ über das Sauerstoffatom miteinander verbunden sind und wobei $R^{(a)}$ an ein Siliziumatom gebunden ist und $R^{(b)}$ nicht an ein Siliziumatom gebunden ist. Es ist dabei besonders bevorzugt, dass $R^{(a)}$ ein gesättigter oder ungesättigter Kohlenwasserstoffrest mit 2 bis 4 Kohlenstoffatomen, vorzugsweise 2 bis 3 Kohlenstoffatomen ist und $R^{(b)}$ ein gesättigter Kohlenwasserstoff mit 1 bis 6 Kohlenstoffatomen, vorzugsweise 2 bis 6 Kohlenstoffatomen ist.

Es ist dabei weiter bevorzugt, dass der Rest $R^3$ in Formel (4) ausgewählt ist aus der Gruppe bestehend aus:

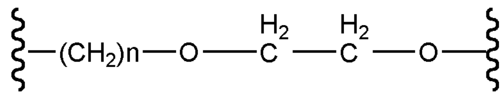
,

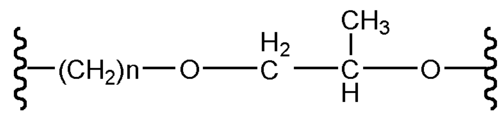
,

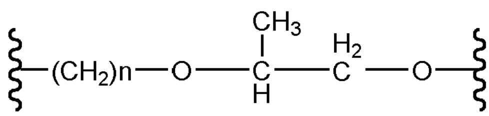
,

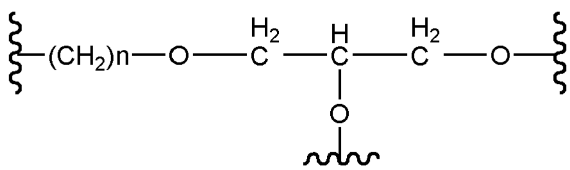

und

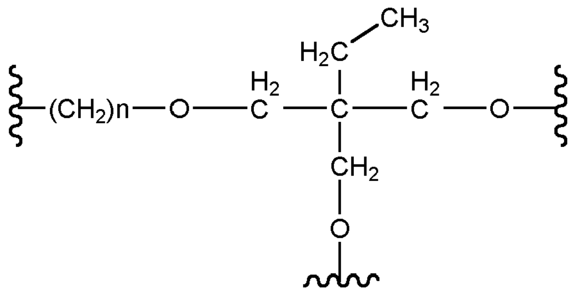

mit n = 2 bis 4, vorzugsweise 2 bis 3, insbesondere 2.

Dabei sind die Reste $R^3$ in dieser Darstellung links an ein Siliziumatom gebunden, wohingegen die restlichen offenen Valenzen Reste $R^4$ tragen.

Es ist besonders bevorzugt, dass der Rest $R^3$ jeweils unabhängig ausgewählt ist aus der Gruppe bestehend aus den Resten (a), (b) und (c):

(a) = 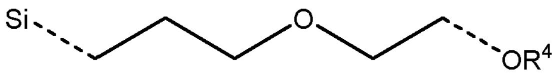

(b) = 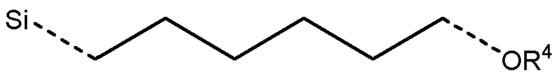

(c) = 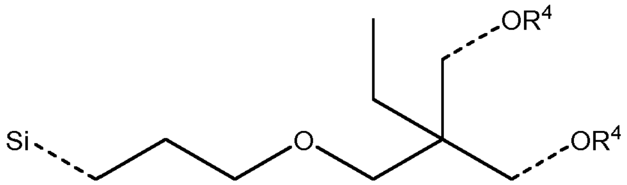

Vorzugsweise werden die als Kunststoffadditiv (A) eingesetzten polyestermodifizierten, verzweigten Organosiloxanen aus hydroxy-funktionellen Organosiloxanen durch Reaktion mit Lactonen hergestellt. Bei dieser Reaktion von hydroxy-funktionellen Organosiloxanen mit Lactonen handelt es sich um eine Ringöffnungspolymerisationsreaktion. Dabei können vorzugsweise die zu den oben aufgeführten Hydroxycarbonsäuren entsprechenden Lactone eingesetzt werden. Besonders bevorzugt ist dabei die Umsetzung von hydroxy-funktionellen Organosiloxanen mit ε-Caprolacton, 3,5,5-Trimethyl-ε-Caprolacton und/oder δ-Valerolacton, noch weiter bevorzugt mit ε-Caprotacton und/oder δ-Valerolacton und insbesondere mit ε-Caprotacton allein oder in Kombination mit δ-Valerolacton.

Es ist bevorzugt, dass bei der Reaktion des mindestens einen hydroxy-funktionellen Organosiloxans 90 % bis 100 % der Lactongruppen umsetzt werden, insbesondere mehr als 99 %. Die Prozentangaben geben hier die Anzahl der umgesetzten Lactongruppen dividiert durch die Anzahl der eingesetzten Lactongruppen an. Der Umsatz der Lactongruppen, auch Lactonumsatz genannt, kann mit Hilfe der $^1$H-NMR-Spektroskopie, wie in den Beispielen beschrieben, bestimmt werden.

Es ist bevorzugt, die Ringöffnungspolymerisationsreaktion durch Katalyse zu beschleunigen. Als Katalysatoren werden bevorzugt Metallcarboxylate oder Metallalkoxide (Metallalkoholate) eingesetzt, bevorzugt ausgewählt aus der Gruppe bestehend aus Zinncarboxylaten, Zinkcarboxylaten, Bismutcarboxylaten, Titanalkoxiden und Zirkoniumalkoxiden. Besonders bevorzugt werden die Katalysatoren ausgewählt aus der Gruppe bestehend aus Zinn(II)-2-ethylhexanoat, Zink(II)-stearat, Zink(II)-neodecaonat, Titan(IV)-butanolat, Titan(IV)-ethanolat und Zirkonium (IV)-butanolat.

Der Katalysator wird vorzugsweise in einem Massenanteil von 0,01 % bis 2 %, vorzugsweise von 0,1 % bis 1 %, bezogen auf die Gesamtmasse der Reaktanten, d.h. also unter Vernachlässigung weiterer nicht reaktiver Bestandteile, wie beispielsweise Lösungsmittel, verwendet.

Die Umsetzung des hydroxyfunktionellen Organsiloxans mit Lactonen kann in Gegenwart oder Abwesenheit, vorzugsweise jedoch in Abwesenheit eines Lösemittels (Lösungsmittels) erfolgen.

Vorzugsweise wird das erhaltene Reaktionsprodukt gereinigt, indem es einem geeigneten thermischen Trennverfahren unterzogen wird. Thermische Trennverfahren sind unter diesem Begriff dem Fachmann bekannt und umfassen alle Verfahren, die auf der Einstellung eines thermodynamischen Phasengleichgewichtes beruhen. Bevorzugt wird das

thermische Trennverfahren ausgewählt aus der Gruppe bestehend aus Destillation, Rektifikation, Adsorption, Kristallisation, Extraktion, Absorption, Trocknung und Ausfrieren; besonders bevorzugt sind Destillation und Rektifikation. Eine bevorzugte Ausführungsform des Verfahrens umfasst daher als weiteren Verfahrensschritt die Destillation und/oder Aufreinigung der Umsetzungsprodukte. Die Destillation und/oder Aufreinigung kann beispielsweise mittels eines Rotationsverdampfers erfolgen, vorzugsweise bei einer Temperatur von 20 bis 250 °C, weiter bevorzugt 40 bis 180 °C und besonders bevorzugt 50 bis 150 °C erfolgen, wobei der Druck dabei vorzugsweise von 0,0001 bis 0,75 bar, noch weiter bevorzugt von 0,001 bis 0,2 bar und besonders bevorzugt von 0,01 bis 0,1 bar beträgt. Die Destillation und/oder Aufreinigung ist insbesondere zur Abtrennung von flüchtigen Bestandteilen, insbesondere von Lösemitteln vorteilhaft.

Die zur Herstellung der Verbindungen gemäß Formel (1), (2) und/oder (3) verwendeten hydroxy-funktionellen Organosiloxanen unterscheiden sich von den Verbindungen gemäß Formel (1), (2) und/oder (3) lediglich dadurch, dass $R^{(II)}$ jeweils unabhängig voneinander ausgewählt ist aus einbindigen organischen Resten, die jeweils einen oder mehrere Hydroxylgruppen tragen, bzw. dadurch, dass $R^4$ = H ist.

Gegebenenfalls wird das hydroxyfunktionelle Organosiloxan dabei vor seiner Umsetzung gereinigt, indem es einem geeigneten thermischen Trennverfahren unterzogen wird.

Das hydroxyfunktionelle Organosiloxan kann wiederum durch Hydrosilylierung einer olefinisch ungesättigten Verbindung, die eine oder mehrere Hydroxylgruppen aufweist, mit einem SiH-funktionellen verzweigten Organosiloxan hergestellt werden.

Die ungesättigte Verbindung, die eine oder mehrere Hydroxylgruppen aufweist, wird vorzugsweise ausgewählt aus der Gruppe bestehend aus Allylglykolen, wie Allyloxyethanol oder Allyloxypropanol, oder deren Äquivalenten mit mehr als einer Glykoleinheit, wie Diethylenglykolmonoallylether oder Dipropylenglykolmonoallylether, Glycerolmonoallylether, Trimethylolpropanmonoallylether, insbesondere 2-Allyloxyethanol. Es können auch 1-Alkenole, wie beispielsweise 1-Hexenol, eingesetzt werden, oder auch 2-Butin-1,4-diol sowie die entsprechenden Alkoxylate, wie beispielsweise die entsprechenden Ethoxylate (auch als Butindiol-EO oder "BEO" bezeichnet), darunter insbesondere 1,4-Di(2-hydroxyethoxy)butin-2.

Um die zur Herstellung der Verbindungen gemäß Formel (1), (2) und/oder (3) verwendeten hydroxy-funktionellen, verzweigten Organosiloxanen herzustellen, werden vorzugsweise SiH-funktionelle (also hydrosilyl-funktionelle) Organosiloxane eingesetzt, die sich von den Verbindungen gemäß Formel (1), (2) und/oder (3) lediglich dadurch unterscheiden, dass $R^{(II)}$ = H ist bzw. das $R^2$ = H ist.

Die Hydrosilylierung erfolgt auf die dem Fachmann bekannte Weise.

Die Hydrosilylierung des erfindungsgemäßen Verfahrens wird bevorzugt mit Hilfe der dem Fachmann geläufigen Katalysatoren der Platingruppe katalysiert, mehr bevorzugt mit Hilfe von Karstedt-Katalysatoren.

Die Hydrosilylierung kann in Gegenwart oder in Abwesenheit, vorzugsweise in Abwesenheit eines Lösemittels erfolgen. Als geeignete organische Lösemittel werden bevorzugt Toluol, Xylol oder Isopropanol eingesetzt. Die eingesetzten Lösemittel sind vorzugsweise wasserfrei. Sofern das Lösemittel eine reaktive Gruppe aufweist, insbesondere eine Hydroxygruppe, kann dies in geringem Umfang zu SiOC-Nebenprodukten führen.

Es ist bevorzugt, wenn bei der Hydrosilylierung mehr als 95%, weiter bevorzugt mehr als 97%, insbesondere 99% bis 100% der SiH-Gruppen umgesetzt werden. Die %-Angaben geben die Anzahl der umgesetzten SiH-Gruppen dividiert durch die Anzahl der eingesetzten der SiH-Gruppen an. Der Nachweis der SiH-Gruppen erfolgt auf die dem Fachmann geläufige Art, bevorzugt gasvolumetrisch nach alkalischer Zersetzung. Dabei kann zum Beispiel eine Probe des Reaktionsgemisches mit einer butanolischen Natriumbutanolat-Lösung (Natriumbutanolat-Gehalt: 5 Gew.-%) umgesetzt und anhand der Menge des entstehenden Wasserstoffes auf die noch vorliegende Menge an SiH-Funktionen geschlossen werden.

Optional wird das mindestens eine SiH-funktionelle, verzweigte Organosiloxan vor der Hydrosilylierung gereinigt, indem es einem geeigneten thermischen Trennverfahren unterzogen wird.

Die SiH-funktionellen, verzweigten Organosiloxane können ebenfalls nach bekannten Verfahren durch Equilibrierung erhalten werden. Die Herstellung von SiH-funktionellen, verzweigten Organosiloxanen mittels Equilibrierung mit Trifluormethansulfonsäure ist beispielsweise in WO 2009/065644 A1 beschrieben.

Die Herstellung der polyestermodifzierten, verzweigten Organosiloxane wird vorzugsweise so ausgeführt, dass sie zwei Verfahrensschritte umfasst, nämlich:

1. Herstellung eines hydroxy-funktionellen Organosiloxans durch Hydrosilylierung einer olefinisch ungesättigten Verbindung, die eine oder mehrere Hydroxylgruppen aufweist, mit einem SiH-funktionellen, verzweigten Organosiloxan; und
2. Umsetzung des hydroxy-funktionellen Organosiloxans mit einem Lacton.

Die Verfahrensschritte können dabei als aufeinanderfolgende, getrennt durchgeführte Schritte jeweils als Eintopfreaktion oder auch dosierkontrolliert (dosagekontrolliert), vorzugsweise jedoch dosierkontrolliert durchgeführt werden. Die Reaktion kann in einem Batch, Semi-Batch oder kontinuierlichen Verfahren durchgeführt werden. Insbesondere

bevorzugt ist die dosierkontrollierte Reaktion des 1. Verfahrensschrittes.

Das Verfahren kann in Gegenwart oder in Abwesenheit eines Lösemittels erfolgen. Als geeignete organische Lösemittel für den 1. Verfahrensschritt werden bevorzugt Toluol, Xylol oder 2-Propanol eingesetzt. Als geeignete organische Lösemittel für den 2. Verfahrensschritt werden vorzugsweise aprotische Lösemittel wie, Toluol, Xylol oder Ester eingesetzt. Besonders bevorzugt werden der 1. und 2. Verfahrensschritt aber in Abwesenheit von Lösemittel durchgeführt.

Es ist bevorzugt, dass das Verfahren bei einer Temperatur von 10 °C bis 160 °C, vorzugsweise von 40 °C bis 150 °C, insbesondere von 70 °C bis 145 °C durchgeführt werden. Es ist weiterhin bevorzugt, dass das Verfahren bei einem Druck von 0,5 bis 20 bar, vorzugsweise 1 bis 5 bar, insbesondere bevorzugt bei Normaldruck durchgeführt wird. Das Verfahren kann sowohl bei Tageslicht als auch unter Lichtausschluss, vorzugsweise bei Tageslicht, durchgeführt werden. Die Verfahren kann zudem entweder unter inerten Bedingungen (Stickstoff, Argon) oder unter einer Sauerstoff- und / oder Luftatmosphäre, vorzugsweise unter einer Stickstoffatmosphäre durchgeführt werden.

Ein weiterer Gegenstand der Erfindung ist daher ein Kunststoffadditiv (A), das nach dem oben ausgeführten Verfahren erhältlich ist.

Es ist bevorzugt, dass der Massenanteil der Gesamtmenge aller Kunststoffadditive (A) von 0,02 % bis <50,00 %, vorzugsweise von 0,05 % bis 10,00 %, insbesondere von 0,10 % bis 5,00 % bezogen auf die Gesamtmasse der erfindungsgemäßen Kunststoffzusammensetzung beträgt.

Erfindungsgemäß umfasst die Kunststoffzusammensetzung neben dem mindestens einen Kunstoffadditiv (A) noch zusätzlich mindestens ein Kunststoff (B).

Es ist bevorzugt, dass der mindestens eine Kunststoff (B) ausgewählt ist aus der Gruppe bestehend aus Thermoplasten und Duroplasten, vorzugsweise aus der Gruppe bestehend aus Thermoplasten. Als Thermoplasten bezeichnet man dabei solche Polymere, die oberhalb der Gebrauchstemperatur einen Fließübergangsbereich besitzen. Thermoplaste sind lineare oder verzweigte Polymere, die im Falle amorpher Thermoplaste oberhalb der Glasübergangstemperatur (Tg), im Falle (teil)kristalliner Thermoplaste oberhalb der Schmelztemperatur (Tm) prinzipiell fließfähig werden. Sie können im erweichten Zustand durch Pressen, Extrudieren, Spritzgießen oder andere Formgebungsverfahren zu Formteilen verarbeitet werden. Die Kettenbeweglichkeit wird dabei so groß, dass die Polymermoleküle leicht aneinander abgleiten und der Werkstoff den schmelzflüssigen Zustand erreicht (Fließbereich, Polymerschmelze). Zu den Thermoplasten gehören weiterhin auch thermoplastisch verarbeitbare Kunststoffe mit ausgeprägten entropieelastischen Eigenschaften, die sogenannten thermoplastischen Elastomeren. Zu den Thermoplasten gehören alle aus linearen oder thermolabil vernetzten Polymermolekülen bestehenden Kunststoffe, zum Beispiel Polyolefine, Vinylpolymere, Polyester, Polyacetale, Polyacetate, Polycarbonate, zum Teil auch Polyurethane und Ionomere aber auch TPEs -thermoplastische Elastomere (RÖMPP ONLINE, Vers. 4.0, Carlowitz u. Wierer, Kunststoffe (Merkblätter), 1. Kapitel Thermoplaste, Berlin: Springer Verlag (1987), Domininghaus, S. 95 ff).

Wird als Kunststoff (B) ein Thermoplast gewählt, so ist es bevorzugt, dass der Thermoplast ausgewählt ist aus der Gruppe bestehend aus Acrylnitril-Butadien-Styrol (ABS), Polyamid (PA), Polylactat (PLA), Poly(alkyl)(meth)acrylat, Polymethylmethacrylat (PMMA), Polycarbonat (PC), Polyethylenterephthalat (PET), Polyethylen (PE), Polypropylen (PP), Polystyrol (PS), Polyetheretherketon (PEEK), Polyvinylchlorid (PVC), und thermoplastischen Elastomeren (TPE), wobei die thermoplastischen Elastomere vorzugsweise ausgewählt sind aus der Gruppe bestehend aus thermoplastischen Polyamidelastomeren (TPA, TPE-A), thermoplastischen Copolyesterelastomeren (TPC, TPE-E), thermoplastischen Elastomeren auf Olefinbasis (TPO, TPE-O), thermoplastischen Styrol-Blockcopolymeren (TPS, TPES), thermoplastischen Polyurethanen (TPU), thermoplastischen Vulkanisaten (TPV, TPE-V) und vernetzten thermoplastischen Elastomeren auf Olefinbasis (TPV, TPE-V).

Der Ausdruck "(meth)acryl" steht dabei für "methacryl" und/oder "acryl" und der Ausdruck "Poly(alkyl)(meth)acrylat" für ein Homo- oder Copolymer von (Meth)acrylsäurealkylestern und gegebenenfalls weiteren Monomeren.

In einer ebenfalls bevorzugten Ausführungsform ist Kunststoff (B) ausgewählt aus der Gruppe bestehend aus Duroplasten.

Duroplaste sind Kunststoffe, die durch irreversible und engmaschige Vernetzung über kovalente Bindungen aus Oligomeren (technisch: Prepolymeren), seltener aus Monomeren oder Polymeren entstehen. Das Wort "Duroplast" wird dabei sowohl für die Rohstoffe vor der Vernetzung (siehe Reaktionsharze) als auch als Sammelbezeichnung für die ausgehärteten, zumeist vollständig amorphen Harze verwendet. Duroplaste sind bei niedrigen Temperaturen stahlelastisch, und auch bei höheren Temperaturen können sie nicht viskos fließen, sondern verhalten sich bei sehr begrenzter Deformierbarkeit elastisch. Zu den Duroplasten gehören unter anderem die technisch wichtigen Stoffgruppen der Diallylphthalat-Harze (DAP), Epoxidharze (EP), Harnstoff-Formaldehyd-Harze (UF), Melamin-Formaldehyd-Harze (MF), Melamin-Phenol-Formaldehyd-Harze (MPF), Phenol-Formaldehyd-Harze und ungesättigten Polyesterharze (UPES) (RÖMPP ONLINE, Vers. 3.7, Becker, G. W.; Braun, D.; Woebcken, W., Kunststoff-Handbuch, Band 10: Duroplaste, 2. Aufl.; Hanser: München,(1988); Elias (6.) 1, 7, 476 ff.).

Wird als Kunststoff (B) ein Duroplast gewählt, so ist es bevorzugt, dass der Duroplast ausgewählt ist aus der

Gruppe bestehend aus Diallylphthalat-Harzen (DAP), Epoxidharzen (EP), Harnstoff-Formaldehyd-Harzen (UF), Melamin-Formaldehyd-Harzen (MF), Melamin-Phenol-Formaldehyd-Harzen (MPF), Phenol-Formaldehyd-Harzen (PF), ungesättigten Polyesterharzen (UP), Vinylester-Harze und Polyurethanen (PU).

Es ist bevorzugt, dass der Massenanteil der Gesamtmenge aller Kunststoffe (B) von >50,00 % bis 99,98 %, vorzugsweise von 90,00 % bis 99,95 %, insbesondere von 95,00 % bis 99,90 % bezogen auf die Gesamtmasse der erfindungsgemäßen Kunststoffzusammensetzung beträgt.

Es ist bevorzugt, dass in der Kunststoffzusammensetzung weitere Zusätze ausgewählt aus der Gruppe bestehend aus Farbmitteln, wie z.B. Pigmenten oder Farbstoffen, Lichtstabilisatoren, UV-Stabilisatoren, Hitzestabilisatoren, UV-Absorbern, IR-Absorbern, antimikrobiellen Wirkstoffen, anorganischen oder organischen Flammschutzmitteln, Thermostabilisatoren, Antioxidantien, vernetzenden Additive und Polymeren, faserverstärkenden Zusatzstoffen auf organischer oder anorganischer Basis, wie z.B. Cellulose-, Flachs-, Bambus, Glas- oder Carbonfasern, Antistatik-Additiven, Schlagzähmodifizierungsmitteln, Geruchsabsorbern, Additiven und Polymeren für verbesserte Barriere-Eigenschaften, anorganischen und organischen Füllstoffen sowie Hilfsstoffen enthalten sind. Diese Zusatzstoffe sind dem Fachmann bekannt.

Bevorzugt enthalten die erfindungsgemäßen Kunststoffzusammensetzungen die oben genannten weiteren Zusätze in einem Massenanteil von höchstens 10 %, vorzugsweise höchstens 5 % und insbesondere höchstens 2 %.

Ein weiterer Gegenstand der Erfindung ist eine Formmasse oder Formkörper enthaltend eine erfindungsgemäße Kunststoffzusammensetzung. Dies schließt Formteile, Werkstücke, Halbzeuge, Folien, Fasern und Fertigteile mit ein.

Kunststoffzusammensetzungen, bei denen die Kunststoffe (B) aus Thermoplasten ausgewählt sind können in verschiedenen Mischaggregaten wie z.B. Doppelschneckenextrudern, BUSS-Knetern, auf der Walze und anderen dem Fachmann bekannten Aggregaten durch Aufschmelzen des Thermoplasts und des Kunststoffadditivs (A) hergestellt werden und anschließend direkt oder auch in einem separaten Prozess zur Herstellung eines Formkörpers beziehungsweise Bauteils verwendet werden. Derartige Prozesse können beispielsweise sein, ohne darauf beschränkt zu sein: Spritzgießen, Extrusion von Profilen, Platten, Folien, sowie Thermoformprozesse.

Das resultierende Bauteil wird auch häufig als Formkörper bezeichnet, wobei der Begriff Bauteil oder Formkörper nicht auf thermoplastische Kunststoffzusammensetzungen beschränkt ist. Aus der Mitverwendung der erfindungsgemäßen Kunststoffzusammensetzung hergestellte Mehrkomponentenbauteile wie z.B. coextrudierte oder laminierte mehrschichtige Platten oder Folien oder Bauteile im Mehrkomponentenspritzguß sind ein weiterer Gegenstand der Erfindung. Gegenstand der Erfindung sind auch solche Mehrkomponentenbauteile, bei denen das Kunststoffadditiv (A) nicht im thermoplastischen Bauteil enthalten ist, sondern Bestandteil einer Beschichtung des thermoplastischen Bauteils ist. Beispielweise kann das Kunststoffadditiv (A) in einer dünnschichtigen, überspritzten thermisch aushärtenden Schicht enthalten sein. Die Materialien zu diesem sogenannten IMC-Prozess (IMC = in mould coating) werden dabei z.B. auf Basis von Polyurethan, Polyharnstoff, vernetzenden Polyestern oder vernetzenden Acrylatdiolen und anderen Materialien hergestellt. Beim IMC-Prozess werden die Kunststoffbauteile während der Herstellung über sogenannte Negativ-Formen im Werkzeug beschichtet. Mit dem IMC-Verfahren entfällt eine zeit- und kostenintensive nachträgliche Lackierung der Kunststoffbauteile.

Es gibt zahlreiche Anwendungsgebiete für die erfindungsgemäß Kunststoffzusammensetzung.

Ein weiterer Gegenstand der Erfindung ist daher die Verwendung der erfindungsgemäßen Kunststoffzusammensetzung oder der erfindungsgemäßen Formmasse oder des erfindungsgemäßen Formkörpers zur Herstellung von dekorativen Abdeckblenden, Anbauteilen, Innenbauteilen oder Außenbauteilen in Kraftfahrzeugen, Booten, Flugzeugen, Windradflügeln, Unterhaltungselektronik sowie Haushaltgeräten und medizintechnischen Produkten.

Ein weiterer Gegenstand der Erfindung ist auch die Verwendung der erfindungsgemäßen Kunststoffzusammensetzung oder der erfindungsgemäßen Formmasse oder des erfindungsgemäßen Formkörpers zur Herstellung von Küchen- oder Laborarbeitsflächen, Folien, Fasern, Profilleisten, Zierleisten, Kabeln.

Die erfindungsgemäße Kunststoffzusammensetzung und/oder die erfindungsgemäße Formmasse und/oder der erfindungsgemäße Formkörper können in zahlreichen Fertigungsverfahren verwendet werden, wie sie vorzugsweise in der Norm DIN 8580:2003-09 beschrieben sind. Dabei kommen die Kunststoffzusammensetzung und/oder die erfindungsgemäße Formmasse und/oder der erfindungsgemäße Formkörper insbesondere bei Urform- und/oder Umformverfahren zum Einsatz. So können Halbzeuge und/oder Fertigprodukte umfassend die erfindungsgemäße Kunststoffzusammensetzung beispielsweise durch Urformverfahren und/oder Umformverfahren hergestellt werden.

Ein weiterer Gegenstand der Erfindung ist daher die Verwendung der erfindungsgemäßen Kunststoffzusammensetzung oder der erfindungsgemäßen Formmasse oder des erfindungsgemäßen Formkörpers in Urformverfahren ausgewählt aus der Gruppe bestehend aus Urformen aus dem flüssigen Zustand und Urformen aus dem plastischen Zustand; vorzugsweise ausgewählt aus der Gruppe bestehend aus Schwerkraftgießen, Druckgießen, Niederdruckgießen, Schleudergießen, Tauchformen, Urformen von faserverstärkten Kunststoffen, Pressformen, Spritzgießen, Spritzpressen, Strangpressen, Extrudieren, Ziehformen, Kalandrieren, Blasformern und Modellieren. Diese Urformverfahren sind beispielsweise in der Norm DIN 8580:2003-09 beschrieben.

Ein weiterer Gegenstand der Erfindung ist daher auch die Verwendung der erfindungsgemäßen Kunststoffzusammensetzung oder der erfindungsgemäßen Formmasse oder des erfindungsgemäßen Formkörpers in Umformverfahren ausgewählt aus der Gruppe bestehend aus Tiefziehen und Thermoformen. Geeignete Umformverfahren sind beispielsweise in der Norm DIN 8580:2003-09 beschrieben.

Ein weiterer Gegenstand der Erfindung ist die Verwendung der erfindungsgemäßen Kunststoffzusammensetzung oder der erfindungsgemäßen Formmasse oder des erfindungsgemäßen Formkörpers im 3D-Druck, vorzugsweise in einem Schmelzschichtungs-Verfahren, auch als Fused Deposition Modeling® (FDM) oder Fused Filament Fabrication (FFF) bezeichnet.

Die als Kunststoffadditive (A) eingesetzten verzweigten Polyestersiloxane zeigen eine gute Mischbarkeit mit geschmolzenen Thermoplasten oder nichtausgehärteten, viskosen Duroplasten, z.B. auf Basis von Epoxiden, Polyurethanen, Polyharnstoffen, ungesättigten Polyestern, Vinylesterharzen, vernetzenden Acrylatharzen auf Basis von Monomeren oder monomeren und polymeren Harzmischungen. Sie sind also im Reaktor mit geschmolzenen Thermoplasten oder viskosen Duroplasten blendbar/mischbar und zeigen bei ausgehärteten Thermoplasten oder Duroplasten eine gute Kompatibilität mit dem Kunststoff.

Bei der Verwendung von linearen Polyestersiloxanen ist dagegen nahezu keine Mischbarkeit bei duroplastisch aushärtenden Zusammensetzungen gegeben. Eine Mischbarkeit mit dem Harz oder dem Harz-Härter-Gemisch des Duroplasten ist auch bei Verwendung von Mischaggregaten, wie beispielsweise einem Dissolver, praktisch nicht gegeben. Dies zeigt sich beispielsweise an einer Phasenseparation der Additive, an sogenanntem Fouling im Reaktor bei der Formulierungsherstellung oder auch an der Schmierfilmbildung mit reduziertem Glanz. Erstaunlicherweise zeigen die verzweigten Polyestersiloxane diese Nachteile nicht, was die Verwendung in großflächigen, gegossenen, verpressten oder durch andere Prozesse hergestellten Bauteilen wie Küchen- oder Laborarbeitsflächen, Bootsrümpfen oder auch Flügeln in der Windkraftindustrie zulässt.

Die Kunststoffadditive (A) führen auch zu Verbesserungen bei der Herstellung von Polyolefin-Folien ohne Oberflächendefekte und mit reduzierter Haifischhaut aufweisen (häufig als Shark Skin bezeichnet). Dadurch kann der Prozess, in Folienprozessen wie Cast- oder Blasfilmapplikationen, aber auch nachgeschalteten Verstreckungsprozessen wie z.B. BOPP-Applikationen (BOPP = biaxial orientiertes PP), entweder schneller gefahren oder sogar persistente Technologien auf Fluor(co)polymerbasis vermieden werden sowie Abfall am Anfang (Anfahren der Anlage) und am Ende (Wechsel zu anderer Folienrezeptur) reduziert werden. Als Haifischhaut oder Shark Skin werden dabei Effekte bezeichnet, bei denen die resultierende Folie entweder V-förmige Fließstrukturen (z.B. im PE) aufweist und die Transparenz deutlich reduziert wird und somit das Material für die Verpackungsindustrie nicht geeignet ist oder auch (z.B. im PP) eine eher wellenförmige, orangenschallenartige Oberflächenstruktur zu beobachten ist, sodass weder in Verpackungen noch in dekorativen Laminierfolien eine gute Qualität erreicht werden kann. Daher werden häufig fluorbasierte Polymer Processing Aids (PPAs) verwendet. Diese müssen jedoch zuerst die Metalloberflächen der Folienaggregate, z.B. die Düsen in der Blas- oder Castfolienanlage, belegen, wodurch die Anfahr- und Abfahrware als Abfall anfällt. Da derartige Additive auch eine niedrige Zersetzungstemperatur aufweisen (unterhalb z.B. der schnell fahrenden PP-Anlagen, bei denen 260 °C üblich sind), kommt es zum sogenannten Die built up (Beschlag bzw. Aufbau einer Schicht an der Düse oder auf den nachgeschalteten Walzen der Folienaggregate) oder sogar zur Korrosion von Anlagenteilen durch Fluor. Dagegen haben die Kunststoffadditive (B) Zersetzungstemperaturen, die mindestens 100 °C oberhalb der PP-Extrusionstemperatur liegen. Für PE ist dieser Abstand entsprechend noch größer.

Weitere vorteilhafte technische Effekte der Kunststoffadditive (A) sind den Beispielen zu entnehmen.

## Beschreibung der Abbildungen

Fig. 1 zeigt die Abziehkraft in Abhängigkeit vom Vorschubweg, bestimmt gemäß Methode [10] wie in den Beispielen beschrieben, für eine klebrige TPU-Oberfläche.

Fig. 2 zeigt die Abziehkraft in Abhängigkeit vom Vorschubweg, bestimmt gemäß Methode [10] wie in den Beispielen beschrieben, für eine teilklebrige TPU-Oberfläche.

Fig. 3 zeigt die Abziehkraft in Abhängigkeit vom Vorschubweg, bestimmt gemäß Methode [10] wie in den Beispielen beschrieben, für eine nichtklebrige TPU-Oberfläche.

## Beispiele

In den nachfolgend aufgeführten Beispielen wird die vorliegende Erfindung beispielhaft beschrieben, ohne dass die Erfindung, deren Anwendungsbreite sich aus der gesamten Beschreibung, und den Ansprüchen ergibt, auf die

in den Beispielen genannten Ausführungsformen beschränkt gelesen werden kann. Insbesondere wird im Folgenden die Synthese der erfindungsgemäßen Kunststoffadditive mit Verzweigungen im Siloxangerüst und gegebenenfalls mit einer zusätzlichen Verzweigung im Polyestersegment beschrieben.

*Herstellung der polyestermodifizierten, verzweigten Organsiloxane:*

*Allgemeine Methoden:*

*Kernspinresonanzspektroskopie (NMR-Spektroskopie):*

Die Charakterisierung der Organosiloxane kann mit Hilfe der $^1$H-NMR- und $^{29}$Si-NMR-Spektroskopie erfolgen. Diese Methoden, insbesondere unter Berücksichtigung der Multiplizität der Kopplungen, sind dem Fachmann geläufig.

*Bestimmungen der SiH-Werte:*

Die SiH-Werte der eingesetzten SiH-funktionellen Organosiloxane, aber auch die der Reaktionsmatrices, werden gasvolumetrisch durch die Natriumbutanolat/Butanol-induzierte Zersetzung aliquot eingewogener Probemengen an einer Gasbürette bestimmt. Eingesetzt in die allgemeine Gasgleichung gestatten die gemessenen Wasserstoffvolumina die Gehaltsbestimmung der SiH-Funktionen in den Edukten aber auch in den Reaktionsansätzen und erlauben so die Umsatzkontrolle. Eingesetzt wird eine Lösung von Natriumbutanolat in Butanol (5 Gew.-% Natriumbutanolat).

*Allgemeine Synthesevorschrift:*

Die Herstellung der polyestermodifizierten Organosiloxane erfolgt in drei Stufen. In der ersten Stufe erfolgt die Herstellung der SiH-funktionellen Organosiloxane. In der zweiten Stufe werden aus den hergestellten SiH-funktionellen Organosiloxanen mittels Hydrosilylierung von ungesättigten Alkoholen hydroxyfunktionelle Organosiloxane hergestellt. In der dritten Stufe werden die erhaltenen hydroxyfunktionellen Organosiloxane mit Lactonen über eine Polyadditionsreaktion zu polyestermodifizierten Organosiloxanen umgesetzt:

*1. Stufe - Herstellung der SiH-funktionellen Organosiloxanen (SH):*

Die Herstellung erfolgte wie in der Druckschrift EP 2176319 B1 offenbart.

In einem 250 mL Vierhalskolben, ausgestattet mit einem KPG-Rührer, einem Innenthermometer, einem Tropftrichter und einer Destillationsbrücke, wurden die jeweiligen Mengen von $\alpha,\omega$-Dihydrogenpolydimethylsiloxan (Rohstoff 1, SiH-Wert = 3,0 mmol/g), Polymethylhydrogensiloxan (Rohstoff 2, SiH-Wert = 15,7 mmol/g), Methyltriethoxysilan (MTEOS), Phenyltriethoxysilan (PTEOS), Decamethylcyclopentasiloxan (D5) und Hexamethyldisilazan (HMDS) unter Rühren bei Raumtemperatur vorgelegt (vgl. Tabelle 1), 0,1 g Trifluormethansulfonsäure zugegeben und 30 Minuten gerührt. Innerhalb von weiteren 30 Minuten wurde unter Rühren eine Mischung aus 7,8 g deionisiertem Wasser und 10 ml Methanol zugetropft und im Anschluss weitere 30 Minuten gerührt. Die Reaktionsmischung wurde für 1 Stunde auf 40 °C erwärmt und anschließend im Wasserstrahlpumpenvakuum von ca. 50 mbar 1 Stunde bei 40 °C destilliert. Nach Neutralisation mit 2 g Natriumhydrogencarbonat und Filtration wurden 6 g des vorgetrockneten sulfonsauren Kationenaustauscherharzes Lewatit® K 2621 zugegeben, 4 Stunden bei 40 °C gerührt und abfiltriert. Man erhielt jeweils eine klare, farblose Flüssigkeit. Einwaagen und weitere Angaben zur Herstellung der SiH-funktionellen Organosiloxane sind der Tabelle 1 zu entnehmen.

Tabelle 1: Einwaagen und weitere Angaben zur Herstellung der SiH-funktionellen Organosiloxane gemäß Formel (3')

| $M^1_{m1}\ M^{2'}_{m2}\ D^1_{d1}\ D^{2'}_{d2}\ T_t\ Q_q$ Formel (3')<br>$M^{2'} = [R^1_2HSiO_{1/2}]$ und $D^{2'} = [R^1HSiO_{2/2}]$; | | | | | | |
|---|---|---|---|---|---|---|
| | SH1 | SH2 | SH3 | SH4 | SH5 | SH6 |
| Rohstoff 1 | 42,2 g | 67,9 g | 42,4 g | - | 43,7 g | 43,3 g |
| Rohstoff 2 | - | - | - | 7,5 g | 5,6 g | - |
| MTEOS | - | 25,9 g | 11,3 g | 7,0 g | 7,8 g | 7,7 g |
| PTEOS | 10,1 g | - | - | - | - | - |

(fortgesetzt)

| $M^1_{m1} M^{2'}_{m2} D^1_{d1} D^{2'}_{d2} T_t Q_q$ Formel (3') <br> $M^{2'} = [R^1{}_2HSiO_{1/2}]$ und $D^{2'} = [R^1HSiO_{2/2}]$; | | | | | | |
|---|---|---|---|---|---|---|
| | SH1 | SH2 | SH3 | SH4 | SH5 | SH6 |
| D5 | 47,7 g | 6,2 g | 46,3 g | 67,2 g | 42,9 g | 49,0 g |
| HMDS | - | - | - | 18,3 | - | - |
| m1 | 0 | 0 | 0 | 3 | 0 | 0 |
| m2 | 3 | 7 | 4 | 0 | 3 | 3 |
| d1 | 26 | 28 | 34 | 23 | 24 | 26 |
| d2 | 0 | 0 | 0 | 3 | 2 | 0 |
| d | 1 | 5 | 2 | 1 | 1 | 1 |
| t | 0 | 0 | 0 | 0 | 0 | 0 |
| $R^1$ | Methyl / Phenyl | Methyl | Methyl | Methyl | Methyl | Methyl |

*2. Stufe - Herstellung der hydroxyfunktionellen Organosiloxane (OHS):*

In einem inertisierten 2L Dreihalskolben mit KPG-Rührer, Innenthermometer und Rückflusskühler wurden die jeweiligen Mengen von SiH-funktionellem Organosiloxan und ungesättigtem Alkohol ausgewählt aus 2-Allyloxyethanol, 1-Hexenol und Trimethylolpropanmonoallylether (TMPMAE) (vgl. Tabelle 2) gemischt und unter Rühren auf 80°C aufgeheizt. Es wurden 6 mg Di($\mu$-chloro)dichlorobis(cyclohexen)diplatinum(II) und 0,36 g N-Ethyldiisopropanolamin hinzugegeben und gerührt, wobei die Exothermie durch Gegenkühlung kontrolliert wurde, um die Temperatur bei 125 °C zu halten. Die Hydrosilylierungsreaktion wurde in Bezug auf den Wasserstoffgehalt der SiH-funktionellen Organosiloxane zu einem vollständigen Umsatz gebracht. Unter vollständigem Umsatz wird im Rahmen der vorliegenden Erfindung verstanden, dass mehr als 99% der SiH-Funktionen umgesetzt wurden. Der Nachweis erfolgt auf die dem Fachmann geläufige Art gasvolumetrisch nach alkalischer Zersetzung. Nachdem die Reaktion zu einem vollständigen Umsatz gebracht wurde, wurden das erhaltene Rohprodukt 1 h bei 130°C und 1 mbar destillativ gereinigt. Man erhielt jeweils ein transparentes, leicht beigefarbenes, flüssiges Produkt. Einwaagen und weitere Angaben zur Herstellung der hydroxyfunktionellen Organosiloxane sind der Tabelle 2 zu entnehmen.

Tabelle 2: Einwaagen und weitere Angaben zur Herstellung der hydroxyfunktionellen Organosiloxane gemäß Formel (3")

$M^1_{m1}\ M^{2"}_{m2}\ D^1_{d1}\ D^{2"}_{d2}\ T_t\ Q_q$ Formel (3")

$M^{2"} = [R^1_2R^{2"}SiO_{1/2}]$ und $D^{2"} = [R^1R^{2"}SiO_{2/2}]$;

| | OHS1 | OHS2 | OHS3 | OHS4 | OHS5 | OHS6 | OHS7 |
|---|---|---|---|---|---|---|---|
| SH | SH1 | SH1 | SH2 | SH3 | SH6 | SH4 | SH5 |
| Einwaage SH | 769,2 g | 769,2 g | 524,0 g | 675,6 g | 560,0 g | 671,0 g | 619,2 g |
| Alkohol | 2-Allyloxyethanol | 1-Hexenol | 2-Allyloxyethanol | 2-Allyloxyethanol | TMPMAE | 2-Allyloxy -ethanol | 2-Allyloxyethanol |
| Einwaage Alkohol | 132.8 g | 151.2 g | 137.9 g | 132.8 g | 185.7 g | 119.5 g | 185.9 g |
| m1 | 0 | 0 | 0 | 0 | 0 | 3 | 0 |
| m2 | 3 | 3 | 7 | 4 | 3 | 0 | 3 |
| d1 | 26 | 26 | 28 | 34 | 26 | 23 | 24 |
| d2 | 0 | 0 | 0 | 0 | 0 | 3 | 2 |
| t | 1 | 1 | 5 | 2 | 1 | 1 | 1 |
| q | 0 | 0 | 0 | 0 | 0 | 0 | 0 |
| p | 1 | 1 | 1 | 1 | 2 | 1 | 1 |
| $R^1$ | Methyl / Phenyl | Methyl / Phenyl | Methyl | Methyl | Methyl | Methyl | Methyl |
| $R^{2"}$ | (a") | (b") | (a") | (a") | (c") | (a") | (a") |

(a") = $-(CH_2)_3-O-(CH_2)_2-OH$
(b") = $-(CH_2)_6-OH$

(c“) = 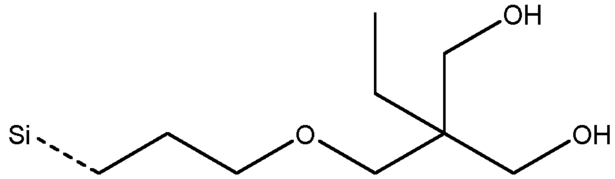

*3. Stufe - Herstellung der polyester-modifizierten Organosiloxane (PES):*

In einem inertisierten 500 ml Dreihalskolben mit KPG-Rührer, Tropftrichter, Innenthermometer und Rückflusskühler wurden die jeweiligen Mengen (vgl. Tabelle 3) von hydroxyfunktionellen Organosiloxanen und Lactonen ausgewählt aus ε-Caprotacton und δ-Valerolacton unter Rühren auf 135 °C erhitzt. 20 g Destillat wurden durch vorsichtiges Anlegen von Vakuum entnommen. Die Apparatur wurde im Anschluss daran mit Stickstoff gespült und so auf Atmosphärendruck gebracht. Anschließend wurde auf 145 °C erhitzt, 500 ppm Zinn(II)-2-Ethylhexanoat hinzugefügt und die Reaktionsmischung bei 150 °C für 6 Stunden gerührt. Die erhaltenen viskosen Flüssigkeiten wurden zum Abkühlen in eine Metall-Schale gefüllt. Nachdem die Produkte vollständig ausgehärtet und abgekühlt waren, wurden sie in weiße Flocken gebrochen oder zu einem weißen Pulver gemahlen. Einwaagen und weitere Angaben zur Herstellung der polyester-modifizierten Organosiloxane sind Tabelle 3 zu entnehmen.

Tabelle 3 - Teil I: Einwaagen und weitere Angaben zur Herstellung der hydroxyfunktionellen Organosiloxane gemäß Formel (2)

| | PES1 | PES2 | PES3 | PES4 | |
|---|---|---|---|---|---|
| OHS | OHS1 | OHS2 | OHS3 | OHS1 | |
| Einwaage OHS | 720.2 g | 727.6 g | 369.9 g | 272.0 g | |
| Lacton | ε-Caprolacton | ε-Caprolacton | ε-Caprolacton | ε-Caprolacton | δ-Valerolacton |
| Einwaage Lacton | 1394.2 g | 1346.3 g | 406.3 g | 255.7 g | 224.3 g |
| m1 | 0 | 0 | 0 | 0 | |
| m2 | 3 | 3 | 7 | 3 | |
| d1 | 26 | 26 | 28 | 26 | |
| d2 | 0 | 0 | 0 | 0 | |
| t | 1 | 1 | 5 | 1 | |
| q | 0 | 0 | 0 | 0 | |
| p | 1 | 1 | 1 | 1 | |
| $R^1$ | Methyl/Phenyl | Methyl/Phenyl | Methyl | Methyl/Phenyl | |
| $R^3$ | (a) | (b) | (a) | (a) | |
| $R^4$ | 14x Capryl | 14x Capryl | 5,7x Capryl | 3,7x Capryl + 3,7x Valeryl | |

Tabelle 3 - Teil II: Einwaagen und weitere Angaben zur Herstellung der hydroxyfunktionellen Organosiloxane gemäß Formel (2)

| | PES5 | PES6 | PES7 | PES8 |
|---|---|---|---|---|
| OHS | OHS4 | OHS5 | OHS6 | OHS7 |
| Einwaage OHS | 437.1 g | 400.7 g | 376.8 g | 410.0 g |
| Lacton | ε-Caprolacton | ε-Caprolacton | ε-Caprolacton | ε-Caprolacton |
| Einwaage Lacton | 684.8 g | 719.1 g | 719.1 g | 694.0 g |

(fortgesetzt)

| | PES5 | PES6 | PES7 | PES8 |
|---|---|---|---|---|
| m1 | 0 | 0 | 3 | 0 |
| m2 | 4 | 3 | 0 | 3 |
| d1 | 34 | 26 | 23 | 24 |
| d2 | 0 | 0 | 3 | 2 |
| t | 2 | 1 | 1 | 1 |
| q | 0 | 0 | 0 | 0 |
| p | 1 | 2 | 1 | 1 |
| $R^1$ | Methyl | Methyl | Methyl | Methyl |
| $R^3$ | (a) | (c) | (a) | (a) |
| $R^4$ | 10x Capryl | 7x Capryl | 14x Capryl | 8x Capryl |

(a) = 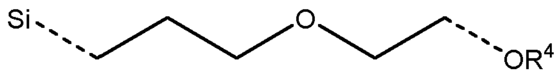

(b) = 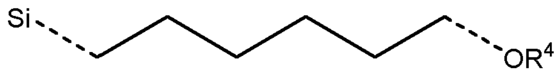

(c) = 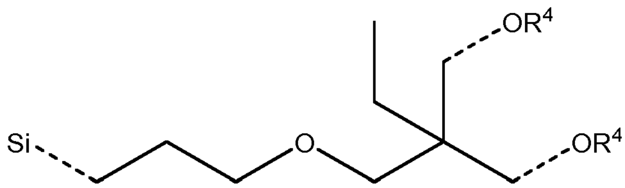

*Polyestermodifiziertes, lineares Organsiloxan:*

Als nichterfindungsgemäßes Vergleichsbeispiel wurde in den anwendungstechnischen Untersuchungen das kommerziell erhältliche Produkt TEGOMER® H-Si 6440P (Fa. Evonik) eingesetzt. Dabei handelt es sich um ein lineares, in $\alpha,\omega$-Position polyestermodifiziertes Organosiloxan. Es wird im Folgenden auch mit PES0 bezeichnet.

*Anwendungstechnische Untersuchungen:*

*Compoundherstellung - Allgemeine Beschreibung:*

Es wurden Vormischungen (Premix) zu je 2,5 kg, bestehend aus dem entsprechenden Kunststoff (PMMA, PE, PP, PA, TPU) und den ausgewählten Kunststoffadditiven angesetzt. Dabei wurden die erfindungsgemäßen und nicht erfindungsgemäßen Kunststoffadditive in den jeweils angegebenen Massenanteilen bezogen auf die Gesamtzusammensetzung der Vormischung zugesetzt (angegeben in % oder Gew.-%).

Die resultierende Vormischung wurde anschließend in die Brabender-Dosiereinheit gegeben und über eine Förderschnecke dem Doppelschneckenextruder Leistritz ZSE27MX-44D (Hersteller Leistritz Extrusionstechnik GmbH) der Verarbeitung zugeführt. Mit einer definierten Drehzahl (rpm) und einer definierten Temperatureinstellung erfolgte die Verarbeitung zum jeweiligen Compound. Der Kunststoffstrang wurde anschließend granuliert, wobei im Allgemeinen ein Wasserbad zur Strangkühlung verwendet wurde mit Ausnahme des TPUs, wo eine Unterwassergranulierung Anwendung fand. Die Temperaturprofile der jeweiligen Kunststoffe wurden gemäß der technischen Datenblätter ausgewählt. Die Temperaturen, Drehzahlen und Drücke für die verschiedenen Kunststoffe sind Tabelle 4 zu entnehmen:

Tabelle 4: Prozessparameter für die Herstellung der Compounds

| Kunststoff | | ExtrusionsTemperatur [°C] | Drehzahl [rpm] | Druck [bar] |
|---|---|---|---|---|
| PMMA | Plexiglas® 8N (Evonik) | 245 | 200 | 36 |
| PE | LLDPE LL 1004YB (ExxonMobil) | 185 | 200 | 60 |
| PP | Sabic® PP 505P (Sabic) | 205 | 200 | 40 |
| PA | Durethan® B30S (Lanxess) | 265 | 140 | 33 |
| TPU | Desmopan® 385 S (Covestro) | 142 | 150 | 70 |

Für die PA-Compounds mit Flammfestigkeit wurde zusätzlich zum Kunststoff-Additiv-Premix eine weitere Komponente in Form des Flammschutzmittels der Rezeptur zugefügt. Dazu wurde das Flammschutzmittel Exolit® 1312 von der Firma Clariant in der Zone 5 des oben genannten Extruders in einer Massenanteil von 25 % bezogen auf die Gesamtzusammensetzung zugegeben. Der Massenanteil des Kunststoff-Additiv-Premix betrug 75 % bezogen auf die Gesamtzusammensetzung.

In den PP-Compounds wurde in einigen Testungen ein Blaumasterbatch verwandt und in den PMMA-Compounds wurde für einige Testungen ein PMMA-Schwarzmasterbatch benötigt, welche dann in der konkreten Ergebnisausführung mit ihren Gew.-% benannt werden.

*Herstellung der Prüfkörper, Formteile und Folien und deren Prüfung:*

Im Folgenden werden die angewandten anwendungstechnischen Methoden aufgeführt, die zur Herstellung der erfindungsgemäßen und nicht erfindungsgemäßen Formteile auf Basis der hergestellten Compounds verwandt wurden. Eine Übersicht der Methoden ist in Tabelle 5 dargestellt.

Tabelle 5: Übersicht der anwendungstechnischen Methoden

| Nr. | Methoden | Kunststoff | Einheit |
|---|---|---|---|
| 1 | Farbstärke (L*a*b*-Werte) DIN 55986 | PP | |
| 2 | Opazität (1mm, 2mm) | PMMA<br>TPU<br>PE<br>PP | % |
| 3 | Glanz (20°) DIN 5036 | PE | |
| 4 | Schmelzflussindex (MFI)<br>DIN 53735 | PE<br>PP | g/10min |
| 5 | Fließspiralen | PA | cm |
| 6 | Shark Skin bzw. Beurteilung der Oberflächengüte | PE<br>PP | 1 = sehr glatt = keine Shark Skin<br>2 = glatt = kaum Shark Skin<br>3 = leicht wellig, Transparenz leicht reduziert = wenig Shark Skin<br>4 = wellig, Transparenz reduziert = starke Shark Skin |
| 7 | Zugprüfung E-Modul (Et) DIN EN 527-2 Type 1A | PA | MPa |
| 8 | Multi-Finger-Scratch (5-Finger Test) | PMMA: 2N, 3N, 5N, 7N, 10N | sichtbar<br><br>leicht sichtbar<br>nicht sichtbar |

(fortgesetzt)

| Nr. | Methoden | Kunststoff | Einheit |
|---|---|---|---|
| 9 | Crockmaster 9N | PMMA: 100, 250, 500 Hübe<br>TPU: 25, 50, 100 Hübe | sichtbar<br><br>leicht sichtbar nicht sichtbar |
| 10 | Reibungskoeffizient $\mu$ (COF) | TPU: 2N gegen Metall | Fig. 1 = schlecht<br>Fig. 2 = mittel<br>Fig. 3 = sehr gut |
| 11 | UL94 | PA | V-0<br>V-1<br>V-2<br>Nicht bestanden |
| 12 | Kriechstromfestigkeit (CTI) | PA | Volt |

*Methoden [1], [2] & [3]: Herstellung und Prüfung der optischen Eigenschaften von Formteilen (Farbstärke, Opazität, Glanz, Transparenz) auf Basis von gespritzten Platten oder Folien*

Die hergestellten Compounds wurden auf einer Spritzgießmaschine (Typ: ES 200/ 50HL, Firma: Engel Schwertberg - Austria) zu glatten Platten (Spritzgusswerkzeug: Doppelplatten glatt, Firma: AXXICON) mit einer Größe von 6 cm × 6 cm und einer Dicke von 2 mm verarbeitet. Spritzbedingungen wurden gemäß den technischen Datenblättern der verwendeten Kunststoffe gewählt. Auch Folienmuster, die auf einer Blasfolien- oder Castfilmanlage hergestellt wurden, ließen sich wie im Folgenden beschrieben wird, beurteilen. Dazu wurde aus der Folie ein 8 cm × 8 cm Stück ausgeschnitten und als Probe verwandt. Die Folie wurde zuvor auf ihre Schichtdicke geprüft, um auszuschließen, dass eventuelle Variationen der Eigenschaften auf Variationen der Schichtdicke zurückgehen. Die Schichtdicke durfte dabei nicht mehr als 10 % von der gewünschten Schichtdicke und der Schichtdicke der Vergleichsprobe abweichen. Für die Herstellung der Folien wurde eine Brabender Lab Station vom Typ 815801 von der Firma Brabender GmbH & Co KG verwandt und das Material mit dem dazugehörigen Miniextruder der Firma Brabender Typ: 625249,120 auf die Düse zugefördert. Es wurde entweder eine 15 cm breite Schlitzdüse für Cast-Folien angebaut oder ein Blasfolienkopf mit einem Durchmesser von 10 cm auf dem Blasfolien gefertigt wurden. Die Castfolien wurden anschließend auf dem Brabender-Gerät Univex Take off Typ: 843322 aufgewickelt und die Blasfolien auf dem Brabender-Gerät Typ: 840806. Die Bedingungen für die Filmherstellung wurden den technischen Datenblättern der verarbeiteten Kunststoffe entnommen und alle Folien wurden mit einer Geschwindigkeit von 18 m/min hergestellt.

Die Platten bzw. Folien wurden mit einem Gerät SP62 der Firma X-Rite auf ihre Opazität hin untersucht und die Transparenz beurteilt.

Im Falle von transparenten Proben wie z.B. bei PMMA wurden die L*a*b*-Werte der transparenten Platten über einem schwarzen Hintergrund erhoben, weil so eine reduzierte Transparenz in höheren L*-Werten deutlich wird und die Opazität bei reduzierter Transparenz höhere Werte aufweist. Im Falle von eingefärbten Platten wurden mit Hilfe des Farbstärkemessgerätes SP62 der Firma X-rite die L*a*b*-Werte ermittelt und die daraus resultierenden Farbstärken jeweils in Bezug zu einer Zusammensetzung ohne Kunststoffadditiv berechnet, also diese von 100% ausgehend kalkuliert. Es wurde das Spektrophotometer der Firma X-Rite Baujahr 09/2007 mit dem Model SP62 für die Messungen verwandt. Diese eingefärbten Platten des PMMA wurden über einem weißen Hintergrund (Normplatte des Gerätes) gemessen.

Für die Bestimmungen des Glanzes der verschiedenen Materialien wurden ebenfalls die zuvor in der Herstellung beschriebenen Platten (6 cm × 6 cm × 2 mm) oder die entsprechenden Folienmuster (8 cm × 8 cm) mit kontrollierter Schichtdicke verwandt. Dabei wurden jeweils 3 Messungen unter unterschiedlichen Winkeln vorgenommen (20°, 60° und 85°), wobei für die Beurteilung die 20° Winkel herangezogen wurden. Die drei Messwerte im 20° Winkel wurden zur Mittelwertbildung herangezogen. Die Folien wurden mit doppelseitigem Klebeband fixiert. Für die Glanzbestimmung wurde ein Gerät der Firma Byk-Gardner GmbH Model Micro-TRI-Gloss der Kategorie 4430 1.5 DC/0.1A herangezogen.

*Methode [4]: Prüfung des Schmelzflussindexes (MFI)*

Die hergestellten Compounds wurden nach DIN 53735 hinsichtlich ihres Schmelzfluss-Verhaltens untersucht (Verwendetes Gerät: Meltflixer$^{LT}$, Typ:MFI-LT, Firma: SWO Polymertechnik GmbH). Dabei wird der MFI (Melt Flow Index, Schmelzflussindex) als Gramm Kunststoff/10min für Kunststoffe und Compounds angegeben:

$$MFI = (Masse [g]/Zeit [s])*600 [s]$$

Alle Versuche der jeweiligen Testreihen wurden, falls keine anderen Angaben gemacht wurden, unter identischen Versuchsbedingungen durchgeführt. Dies diente dem Zweck der Vergleichbarkeit der Ergebnisse. Dabei wurden jeweils die Bedingungen für das Auflagegewicht (Masse in der oben benannten Formel) so gewählt, wie sie für die in den Compounds verwendeten Kunststoffen auf den technischen Datenblättern angegeben waren.

*Methode [5]: Fließspiralen*

Die Fließfähigkeit der flammhemmenden Polyamid-Compounds wurde durch die Herstellung von Fließspiralen (Spritzgusswerkzeug: Fließspirale, Firma: AXXICON) ermittelt. Diese wurden auf der Spritzgießmaschine (Typ: ES 200/ 50HL, Firma: Engel Schwertberg - Austria) hergestellt und gegen Compounds verglichen, die kein Additiv enthielten. Die Spritzgussbedingungen wurden gemäß den Angaben des technischen Datenblatts des verwendeten Polyamids gewählt. Werden längere Fließspiralen beobachtet, bedeutet dies eine bessere Fließfähigkeit.

*Methode [6]: Beurteilung der Oberflächengüte/Haifischhaut (Shark Skin)*

Die PE- und PP-Folienmuster zur Beurteilung der Oberflächengüte wurden wie unter den Methoden [1] [2] [3] beschrieben mit dem modularen Brabender-Aufbau hergestellt. Aus den resultierenden Folien wurden 8 cm × 8 cm große Stücke geschnitten, visuell beurteilt und mit einem wie folgt benotet:

1 = sehr glatt = keine Shark Skin
2 = glatt = kaum Shark Skin
3 = leicht wellig, Transparenz leicht reduziert = wenig Shark Skin
4 = wellig, Transparenz reduziert = starke Shark Skin

Bei PE-Folien kommt es üblicherweise eher zur Ausbildung von V-förmigen Fließstrukturen, was als Shark Skin bezeichnet wird, wohingegen bei PP-Folien eher eine Oberflächenwelligkeit zu beobachten ist. Beide Effekte wurden hier in der Beurteilung der Folien zusammengefasst. Darüber hinaus wurde die Zeit bestimmt, nach der sich das beste Folienbild bei dem eingesetzten Additiv ausbildet. Je kürzer die Zeit ist, desto weniger Abfall entsteht in einer Folienanlage. Eine kürzere Zeit ist daher vorteilhaft. PE und PP sind ohne Zusatz eines PPAs (Polymer Processing Aid) häufig nicht verarbeitbar.

*Methode [7]: Herstellung und Prüfung der mechanischen Eigenschaften von Formteilen*

Für die Prüfung der mechanischen Eigenschaften der Compounds wurden Schulterstäbe (gemäß DIN EN ISO 527-2 Typ 1A) mit Hilfe der Spritzgießmaschine (Typ: ES 200/ 50HL, Firma: Engel Schwertberg - Austria) gemäß den auf den technischen Datenblättern der Kunststoffe vorgegebenen Spritzgussbedingungen gespritzt (Spritzgusswerkzeug: Schulterstäbe, Firma: AXXICON). Mit der Zugprüfmaschine (Typ Zwick Roell Z010, Typ BDO-FBO10TN mit Makroaufnehmer Typ B066550) wurden die Probekörper hinsichtlich ihrer Mechanik ausgeprüft und die folgende Kennzahl ermittelt: Zugmodul/E-Modul (Et) (nach DIN EN ISO 527-2 Typ 1A).

*Methoden [8] & [9]: Herstellung und Prüfung der Wischbeständigkeit (Scheuerbeständigkeit) und Kratzfestigkeit von* Formteilen (5-Finger-Test & Crockmaster 9N)

Die hergestellten Compounds wurden auf einer Spritzgießmaschine (Typ: ES 200/ 50HL, Firma: Engel Schwertberg - Austria) zu glatten Platten mit einer Größe von 6 cm × 6 cm und einer Dicke von 2 mm verarbeitet (analog der Formteile zur Beurteilung der optischen Eigenschaften). Die schwarzen und transparenten Platten dienten zur Beurteilung von Kratzern und Abrieben, die durch die Testung erzeugt wurden.

Zur Bewertung der Scheuerbeständigkeit (Wischbeständigkeit) wurden die Platten mit einem Crockmaster 9N (CM-5 AATCC CROCKMETER, Firma: SDL Atlas; Model M238BB) nach jeweils 100, 250 und 500 Hüben für PMMA und nach jeweils 25, 50 und 100 Hüben für TPU beurteilt.

Die Kratzfestigkeit wurde mit einem Multifingertest/ 5-Finger-Test (Modell: 710, Hersteller: Taber Industrie) ermittelt. Die Kratzer entstanden durch eine Spitze (Durchmesser 1mm), auf die unterschiedliche Auflagegewichte, aufsteigend von 2N, 3N, 5N, 7N und 10N aufgelegt wurden. Die fünf Spitzen fuhren dabei mit 7,5 Meter pro Minuten über die zu untersuchenden Platten. Anschließend wurden die Kratzer beurteilt.

*Methode [10]: Bestimmung des Reibungskoeffizienten (COF)*

Eine TPU-Platte (6 cm × 6 cm mit 2 mm Dicke) wurde mit einem Auflagegewicht von 200 g (entspricht ungefähr einer Auflagekraft $F_p$ von 2 N) auf einer Metallplatte mit einer Geschwindigkeit von 100 mm/min bewegt. Die resultierende Kraft $F_D$ wurde über die Vorschubstrecke von 15 cm detektiert und als Graph aufgezeichnet. Der Reibungskoeffizient ist der Quotient aus resultierender Kraft (Abziehkraft) und Auflagekraft (COF = $F_D/F_P$). Als Messgerät wurde ein Gerät der Firma Ziegler, Baujahr 11/2016 vom Typ FT-1000-H verwendet. Bei der Beurteilung der Kunststoffzusammensetzung kam es allerdings nicht nur auf die Erniedrigung des COF an, sondern auch auf die Form des Graphen, wie unten ausgeführt wird, um die Kunststoffzusammensetzung in bewegten Teilen wie z.B. Pumpen als Dichtungen einbauen zu können. Der gemessene Graph wurde dazu mit den Kurventypen in Fig. 1, 2 und 3 verglichen und kategorisiert:

Fig. 1 = schlecht
Fig. 2 = mittel
Fig. 3 = sehr gut

Der in Fig. 1 dargestellte Graph ist dabei typisch für eine klebrige Oberfläche und einen niedrigen Reibungskoeffizienten, wie er im Falle eines TPUs ohne Additiv beobachtet wurde.
Der in Fig. 2 dargestellte Graph ist typisch für eine teilklebrige Oberfläche sowie eine uneinheitliche Reduktion des Reibungskoeffizienten, besonders beim Start der Messung. Die stärkere Variation in der Amplitude (y-Achse) deutet auf inhomogene Additivverteilung hin. Das Reibungsverhalten ist häufig nicht reproduzierbar.
Der in Fig. 3 dargestellte Graph ist typisch für eine nichtklebrige Oberfläche. Es liegt eine homogene Additivverteilung vor. Die Variation in der Amplitude (y-Achse) ist kleiner als 0,1 über den gesamten Vorschubweg der Messung. Die Messung ist reproduzierbar.

*Methode [11]: Herstellung und Prüfung von flammhemmenden Polyamid Formteilen (UL94)*

Nach dem Trocknen der PA-Compounds auf eine Restfeuchtigkeit von <0.1Gew.-% wurden diese auf einer Spritzgießmaschine (Typ: ES 200/ 50HL, Firma: Engel Schwertberg - Austria) zu Prüfkörpern verarbeitet (Spritzgusswerkzeug: Zugstab 1,5 mm dick & 3,00 mm dick, Firma: AXXICON). Mit Hilfe des UL 94-Tests (Underwriter Laboratories) wurden die Prüfkörper auf Flammwidrigkeit geprüft und klassifiziert. Für die Ermittlung der Flammfestigkeit gemäß der untenstehenden Brandklassen wurden jeweils 5 Prüfkörper pro hergestelltem Compound der UL 94 Untersuchung unterzogen.
UL 94 Brandklassen:

V-0: Es ist kein Nachbrennen länger als 10 Sekunden erlaubt. Die Summe der Nachbrennzeit bei 10 Beflammungen darf nicht größer als 50 Sekunden sein. Die Probe darf nicht brennend abtropfen. Die Probe darf nicht vollständig abbrennen. Es ist kein Nachglühen der Probe länger als 30 Sekunden nach Ende der Beflammung erlaubt.

V-1: Es ist kein Nachbrennen länger als 30 Sekunden erlaubt. Die Summe der Nachbrennzeit bei 10 Beflammungen darf nicht größer als 250 Sekunden sein. Es ist kein Nachglühen der Probe länger als 60 Sekunden nach Ende der Beflammung erlaubt. Die anderen Kriterien wie bei V0.

V-2: Entzündung der Watte durch brennendes Abtropfen. Die übrigen Kriterien wie bei V-1.

n.b.: Nicht bestanden. Erfüllt noch nicht einmal die Brandklasse V-2.

Die Stäbe wurden dabei in einer UL 94 Prüfkammer der Firma Mess- und Prüfsysteme GmbH abgebrannt.

*Methode [12]: CTI - Ermittlung der Kriechstromfestigkeit von flammhemmenden Polyamid Formteilen*

Von den gemäß Methode [7] hergestellten PA-Prüfkörpern wurde der CTI-Wert (Comparative Tracking Index) bestimmt, um Aussagen über die Kriechstromfestigkeit zu treffen. Dabei wurden die Prüfungen durch eine Doppelbestimmung an den beiden Kopfenden des Schulterstabes vorgenommen. Der CTI-Wert sagt aus, bis zu welcher Spannung (in Volt), der Prüfkörper kein Tracking zeigt, wenn alle 30 Sekunden ein Tropfen (maximal 50 Tropfen) genormter Elektrolytlösungen zwischen zwei Platinelektroden getropft wurden. Tracking bedeutet dabei, dass der Probekörper unter Spannung leitfähig wird und dadurch entflammt. Es kommt zum Einbrennen einer Kerbe in das Compound, die anschließend vermessen wird. Beste Klassifizierung derartiger Compounds sind 600 V und <1 mm Einbrenntiefe, was in E+E-Applikationen erzielt werden soll. Zur Bestimmung des CTI wurde ein Gerät der Firma PTL Dr. Grabenhorst

GmbH vom Typ M 31.06 verwendet.

*Anwendungstechnische Ergebnisse der untersuchten Kunststoffzusammensetzungen (Compounds, Platten, Filmen):*

*Ergebnisse für Polyolefin-Zusammensetzung basierend auf Polyethylen (PE) und Polypropylen* (PP):

*Ergebnisse für Polyethylen-Zusammensetzungen (PE):*

Die verzweigten Polyestersiloxane PES1 bis PES8 wurden im Vergleich zum linearen Polyestersiloxan PES0 mit jeweils 2 Gew.-% bezogen auf die Gesamtzusammensetzung eingesetzt und mit einem PE ohne Additiv (Nullprobe) hinsichtlich der Opazität und des Glanzes bei 20° von 2 mm Platten verglichen. Die resultierenden Compounds werden im Folgenden mit PE0-A bis PE8-A bezeichnet. Analog wurden Compounds hergestellt mit jeweils einem Gehalt von 3.5 Gew.-% an Polyestersiloxanen. Die resultierenden Compounds werden im Folgenden mit PE0-B bis PE8-B bezeichnet. Aus diesen Compounds sowie einem PE ohne Additiv (Nullprobe) wurden Filme mit einer Dicke von 100 μm hergestellt. Neben der Opazität des so erhaltenen Films wurde der Schmelzflussindex (MFI) der Compounds bestimmt. Die Ergebnisse sind in Tabelle 6 zusammengefasst.

Tabelle 6: Ergebnisse für Polyethylen-Zusammensetzungen

| Additiv | PE | | | | |
|---|---|---|---|---|---|
| | Compound | Opazität 2mm Platte | Opazität 0,1mm Film | Glanz 20° | MFI [g/10min] |
| | PE ohne Additiv | 50,29% | 13,82% | 62,8 | 2,4 |
| PES0 | PE0-A | 60,18% | | 61,9 | |
| | PE0-B | | 15,09% | | 2,9 |
| PES1 | PE1-A | 53,21% | | 67,2 | |
| | PE1-B | | 13,99% | | 4,8 |
| PES2 | PE2-A | 56,28% | | 68,4 | |
| | PE2-B | | 14,07% | | |
| PES3 | PE3-A | 56,17% | | 68,9 | |
| | PE3-B | | 13,84% | | 4,6 |
| PES4 | PE4-A | 52,11% | | 74,9 | |
| | PE4-B | | 13,67% | | |
| PES5 | PE5-A | 55,63% | | 69,1 | |
| | PE5-B | | 14,04% | | |
| PES6 | PE6-A | 54,78% | | 73,5 | |
| | PE6-B | | 13,96% | | 4,2 |
| PES7 | PE7-A | 54,91% | | 71,0 | |
| | PE7-B | | 13,92% | | |
| PES8 | PE8-A | 55,29% | | 75,2 | |
| | PE8-B | | 13,94% | | 4,5 |

Die erfindungsgemäßen verzweigten Polyestersiloxane PES1 bis PES8 wiesen gegenüber dem linearen Polyestersiloxan PES0 ohne Verzweigung in 2 mm Platten unter Verwendung von 2 Gew.-% eine deutlich bessere Opazität auf. Dies war auch bei höherer Additivierung mit 3,5 Gew.-% noch in 0,1 mm dicken Filmen deutlich. Bei allen erfindungsgemäßen Beispielen war grundsätzlich eine Erhöhung des Glanzes zu beobachten. Ein besonders hoher Glanz konnte bei PES1, PES6 und PES8 beobachtet werden. Gerade bei Artikeln, die durch Spritzgussverfahren oder im sogenannten Blow Moulding Verfahren hergestellt werden, wie z.B. Kosmetikflaschen und ähnliches, führt dies zu einem höherwertigen Aussehen. Die erfindungsgemäßen Kunststoffadditive erlauben eine Erhöhung des MFI, was sowohl im Spritzguss ein Vorteil sein kann, aber auch bei der Herstellung von Filmen, wo es durch neue Verpackungsverordnungen zu 5-13 Filmschichten im Aufbau die Notwendigkeit gibt, die Fließfähigkeit von verwendeten Polyolefinen so einzustellen, dass Monopolymeraufbauten möglich sind, also alle Schichten aus nur einem Polyolefin (z.B. PE) gestalten werden müssen. Unterschiedliche Funktionsschichten müssen daher in ihrem MFI anpassbar sein.

*Ergebnisse für Polypropylen-Zusammensetzungen - Compounds und Platten:*

Die verzweigten Polyestersiloxane PES1 bis PES8 wurden im Vergleich zu dem linearen Polyestersiloxane PES0 mit jeweils 2 Gew.-% bezogen auf die Gesamtzusammensetzung eingesetzt und mit einem PP ohne Additiv (Nullprobe) hinsichtlich der Opazität von 2 mm Platten verglichen. Die resultierenden Compounds werden im Folgenden mit PP0-A bis PP8-A bezeichnet. In einem weiteren Versuch wurden die PP0-A bis PP8-A Materialien eingefärbt, um die erzielbare Farbstärke zu bestimmen. Dazu wurden 1,5 Gew.-% bezogen auf die Gesamtzusammensetzung eines PP-Masterbatches verwandt, um die Materialien blau einzufärben. Der PP-Masterbatch war aus 60 Gew.-% PP mit einem MFI von 45g/10min, 30 Gew.-% Pigment Blue Phthalocyanin und 10 Gew.-% TEGOMER® P 121 (Gew.-% bezogen auf die Zusammensetzung des PP-Masterbatches) zusammengesetzt. Als Nullprobe wurde ein entsprechendes PP-Compound ohne Additiv zur Berechnung der Farbstärke basierend auf L*a*b*-Werten herangezogen. Die Farbstärke der Nullprobe wurde dabei auf 100% gesetzt. Zusätzlich wurden Compounds mit Gehalt von 6 Gew.-% an Polyestersiloxanen hergestellt. Die resultierenden Compounds werden im Folgenden mit PP0-B mit PP8-B bezeichnet. Von diesen Materialien wurde der MFI ermittelt. Die Ergebnisse sind in Tabelle 7 zusammengefasst.

Tabelle 7: Ergebnisse für Polypropylen-Zusammensetzungen - Compounds und Platten

| Additiv | PP | | | |
|---|---|---|---|---|
| | Compound | Opazität 2mm Platte | MFI [g/10min] | Farbstärke der blau eingefärbten Platten |
| | PP ohne Additiv | 20,33% | 4,88 | 100,0% |
| PES0 | PP0-A | 35,92% | | 69,2% |
| | PP0-B | | 5,67 | |
| PES1 | PP1-A | 29,18 | | 83,7% |
| | PP1-B | | 8,39 | |
| PES2 | PP2-A | | | |
| | PP2-B | | | |
| PES3 | PP3-A | 26,81% | | 89,2% |
| | PP3-B | | 7,76 | |
| PES4 | PP4-A | | | |
| | PP4-B | | | |
| PES5 | PP5-A | | | |
| | PP5-B | | | |
| PES6 | PP6-A | 24,52% | | 91,1% |
| | PP6-B | | 8,60 | |
| PES7 | PP7-A | | | |
| | PP7-B | | | |
| PES8 | PP8-A | 27,44% | | 85,3% |
| | PP8-B | | | |

Die erfindungsgemäßen Beispiele, basierend auf den verzweigten Polyestersiloxanen PES1 bis PES8, zeigten gegenüber dem nichterfindungsgemäßen Beispiel, basierend auf dem linearen Polyestersiloxan PESO, deutlich reduzierte Opazitätswerte und somit eine höhere Transparenz. Gleiches war für die blau eingefärbten Materialien zu beobachten, wo das Blaupigment seine Farbstärke aus dem PP-Masterbatch deutlich stärker zum Ausdruck brachte. Für die Einfärbung von Kunststoffzusammensetzung kann somit weniger Masterbatch verwendet werden. Zudem war der Farbton auch insgesamt brillanter. Dadurch ist es möglichem, auch optisch anspruchsvollere Teilen im Spritzgussverfahren herzustellen. Die Erhöhung des MFI durch die erfindungsgemäßen Additive ist ein weiterer Vorteil, der im Falle der verzweigten Polyestersiloxane PES1-PES8 deutlich stärker ausfiel als bei dem unverzweigten, linearen Polyestersiloxan PES0.

*Ergebnisse für Polypropylen-Zusammensetzungen - Filme:*

In einem weiteren Schritt wurden Compounds auf Basis von PP mit einem Additivgehalt von 10 Gew.-% hergestellt. Solche höherkonzentrierten Compounds werden in der Industrie auch als Additivmasterbatch bezeichnet. Im Anschluss wurde 1 Gew.-% dieses Compounds auf der Blasfolienanlage eingesetzt und mit 99 Gew.-% PP ohne Additiv in der Brabendereinheit gemischt, sodass die resultierende Konzentration des Additivs in der hergestellten 80 µm Folie 0,1 Gew.-% betrug. Die entsprechenden Zusammensetzungen werden im Folgenden mit PP0-C bis PP8-C bezeichnet. Die Filme wurden nun hinsichtlich der Haifischhautausbildung (Shark Skin) in Abhängigkeit von der Zeit beurteilt. Die Haifischhautausbildung wurde dabei mit den Noten 1 bis 4 wie oben erläutert bewertet. Die Folienqualität wurde im Abstand von 30 Sekunden anhand von Folienmustern, die wie oben beschrieben entnommen wurden, beurteilt. Je kürzer die Zeit und je niedriger die Note ist, desto besser ist das eingesetzte Kunststoffadditiv. Analog wurden Filme basierend auf den Zusammensetzungen PP0-D bis PP8-D hergestellt. Diese Zusammensetzungen wurden aus nur 0,5 Gew.-% der 10%igen Compounds und 99,5 Gew.-% PP auf der Blasfolieneinheit gemischt, sodass die resultierende Konzentration des Additivs in der hergestellten 80 µm Folie 0,05 Gew.-% betrug. Die Ergebnisse sind in Tabelle 8 zusammengefasst.

Tabelle 8: Ergebnisse für Polypropylen-Zusammensetzungen - Filme

| Additiv | PP (Beurteilung SharkSkin) | | | | |
|---|---|---|---|---|---|
| | Compound | 30 s | 60 s | 90 s | 120 s |
| | PP ohne Additiv | 4 | 4 | 4 | 4 |
| PES0 | PP0-C | 3 | 3 | 3 | 2 |
| | PP0-D | 4 | 4 | 3 | 3 |
| PES1 | PP1-C | 3 | 2 | 1 | 1 |
| | PP1-D | 3 | 2 | 2 | 1 |
| PES2 | PP2-C | 2 | 2 | 1 | 1 |
| | PP2-D | 3 | 2 | 1 | 1 |
| PES3 | PP3-C | 2 | 2 | 1 | 1 |
| | PP3-D | 2 | 2 | 2 | 1 |
| PES4 | PP4-C | 3 | 2 | 1 | 1 |
| | PP4-D | 3 | 2 | 2 | 1 |
| PES5 | PP5-C | 2 | 2 | 2 | 1 |
| | PP5-D | 3 | 2 | 2 | 1 |
| PES6 | PP6-C | 2 | 2 | 1 | 1 |
| | PP6-D | 2 | 2 | 1 | 1 |
| PES7 | PP7-C | 2 | 2 | 1 | 1 |
| | PP7-D | 2 | 2 | 1 | 1 |
| PES8 | PP8-C | 3 | 2 | 1 | 1 |
| | PP8-D | 3 | 2 | 2 | 1 |

Die Verwendung eines typischen Additivmasterbatches auf Fluorpolymerbasis (Ampacet Proflow 2) ergab dagegen bei einer Konzentration von 1 Gew.-% auch nach 120 s noch keine Note 1, sondern es mussten mit 2,5 Gew.-% des Masterbatches über 3 bis 4 min die Metalloberflächen der Maschinenteile (Düsen oder andere Teile) gesättigt werden, um danach mit 1 bis 0,5 Gew.-% Masterbatch eine Oberflächengüte mit der Note 1 bis 2 zu erhalten. Durch die Verwendung der erfindungsgemäßen Polyestersiloxane PES1 bis PES8 konnten hingegen bereits nach 30 Sekunden Verbesserungen in der Oberflächengüte bzw. der Reduktion der Haifischhaut beobachtet werden, wie sie für fluor(co)polymerbasierte PPAs (Polymer Processing Aid) nicht abbildbar sind. Somit kann mit den erfindungsgemäßen Polyestersiloxane auch bereits mit Zugaben von 0,5-1,0 Gew.-% gearbeitet werden. Es ist keine vorherige Belegung der Metalloberflächen der Maschinenteile erforderlich. Zudem konnten mit den erfindungsgemäßen Polyestersiloxane PES1 bis

PES8 bereits nach kurzer Zeit (60 s) Folien mit einer Oberflächengüte der Note 2 oder besser erhalten werden. Hierin unterschieden sich die verzweigten Polyestersiloxane auch klar vom unverzweigten, linearen Polyestersiloxan PESO, bei dem kaum eine Verbesserung der Oberflächengüte ersichtlich war oder erst zu einem deutlich späteren Zeitpunkt. Aus diesem Grund kann in Folienanlagen mit beispielsweise 2 bis 5 m Durchmesser durch die verzweigten Polyestersiloxane PES 1 bis PES 8 eine signifikante Reduktion von Abfall erfolgen und ohne Korrosion von Anlagenteilen die Beschlagsbildung (Die Built Up) reduziert werden. Damit können Standzeiten von Folienanlagen reduziert werden.

*Ergebnisse für Polymethylmethacrylat-Zusammensetzungen:*

Das nichterfindungsgemäße Polyestersiloxan PES0 und einige der erfindungsgemäßen Polyestersiloxane PES1 bis PES8 wurden in transparentem PMMA (PLEXIGLAS® 8N) verarbeitet. Die Konzentration der Polyestersiloxane betrug dabei 2 Gew.-% für die Compounds PMMA0-A bis PMMA8-A und 3 Gew.-% für die Compounds PMMA0-B bis PMMA8-B bezogen auf die Gesamtzusammensetzung. Als Nullprobe wurde das PLEXIGLAS® 8N ohne weiteren Zusatz von Additiven verwendet. Es wurden die Opazität von Platten mit einer Dicke von 2 mm sowie die Vicat-Erweichungstemperatur bestimmt. Für die Bestimmung der Kratzfestigkeit (5-Finger-Test) und der Wischbeständigkeit (Crockmaster) wurde dagegen schwarz eingefärbtes PMMA verwendet. Für die Schwarzeinfärbung wurde den Compounds PMMA0-A bis PMMA8-A daher bei der Herstellung 2 Gew.-% des Schwarzmasterbatches Fibaplast Schwarz PMMA Batch 30504410 zugesetzt. Die Ergebnisse sind in Tabelle 9 zusammengefasst.

Tabelle 9 - Teil I: Ergebnisse für Polymethylmethacrylat-Zusammensetzungen

| Additiv | PMMA | | | |
|---|---|---|---|---|
| | Compound | Opazität (transparentes PMMA) | Farbstärke (schwarzes PMMA) | Erweichungstemperatur [°C] |
| | PMMA ohne Additiv | 16,08% | 100% | 107,5 |
| PES0 | PMMA0-A | 22,61% | | 103,5 |
| | PMMA0-B | 25,03% | | 103,0 |
| PES1 | PMMA1-A | 16,41% | 94% | 107,0 |
| | PMMA1-B | 16,88% | | 106,5 |
| PES2 | PMMA2-A | 16,52% | | 107,0 |
| | PMMA2-B | 17,22% | | 107,0 |
| PES3 | PMMA3-A | 16,83% | 93% | 107,5 |
| | PMMA3-B | 17,37% | | 107,5 |
| PES4 | PMMA4-A | 16,24% | | 107,0 |
| | PMMA4-B | 16,79% | | 106,5 |
| PES5 | PMMA5-A | 17,20% | 97% | 107,0 |
| | PMMA5-B | 17,63% | | 106,5 |
| PES6 | PMMA6-A | 18,06% | 94% | 106,5 |
| | PMMA6-B | 18,71% | | 106,5 |
| PES7 | PMMA7-A | 16,72% | 91% | 106,5 |
| | PMMA7-B | 17,37% | | 107,0 |
| PES8 | PMMA8-A | 16,43% | 95% | 107,0 |
| | PMMA8-B | 16,88% | | 106,5 |

Tabelle 9 - Teil II: Ergebnisse für Polymethylmethacrylat-Zusammensetzungen

| Additiv | PMMA | | | | | | | | |
|---|---|---|---|---|---|---|---|---|---|
| | Compound | 5-Finger-Test (schwarzes PMMA) | | | | | Crockmaster (schwarzes PMMA) | | |
| | | 2N | 3N | 5N | 7N | 10N | 100 Hübe | 250 Hübe | 500 Hübe |
| | PMMA ohne Additiv | sichtbar | sichtbar | sichtbar | sichtbar | sichtbar | sichtbar | sichtbar | sichtbar |
| PES0 | PMMA0-A | nicht sichtbar | nicht sichtbar | nicht sichtbar | leicht sichtbar | leicht sichtbar | nicht sichtbar | leicht sichtbar | sichtbar |
| | PMMA0-B | | | | | | | | |
| PES1 | PMMA1-A | nicht sichtbar | nicht sichtbar | nicht sichtbar | nicht sichtbar | leicht sichtbar | nicht sichtbar | leicht sichtbar | leicht sichtbar |
| | PMMA1-B | | | | | | | | |
| PES2 | PMMA2-A | nicht sichtbar | nicht sichtbar | nicht sichtbar | nicht sichtbar | nicht sichtbar | nicht sichtbar | nicht sichtbar | leicht sichtbar |
| | PMMA2-B | | | | | | | | |
| PES3 | PMMA3-A | nicht sichtbar | nicht sichtbar | nicht sichtbar | nicht sichtbar | nicht sichtbar | nicht sichtbar | leicht sichtbar | leicht sichtbar |
| | PMMA3-B | | | | | | | | |
| PES4 | PMMA4-A | nicht sichtbar | nicht sichtbar | nicht sichtbar | nicht sichtbar | leicht sichtbar | | | |
| | PMMA4-B | | | | | | | | |
| PES5 | PMMA5-A | | | | | | nicht sichtbar | leicht sichtbar | leicht sichtbar |
| | PMMA5-B | | | | | | | | |
| PES6 | PMMA6-A | nicht sichtbar | nicht sichtbar | nicht sichtbar | nicht sichtbar | nicht sichtbar | | | |
| | PMMA6-B | | | | | | | | |
| PES7 | PMMA7-A | nicht sichtbar | nicht sichtbar | nicht sichtbar | nicht sichtbar | nicht sichtbar | nicht sichtbar | nicht sichtbar | leicht sichtbar |
| | PMMA7-B | | | | | | | | |
| PES8 | PMMA8-A | nicht sichtbar | nicht sichtbar | nicht sichtbar | nicht sichtbar | nicht sichtbar | | | |
| | PMMA8-B | | | | | | | | |

Die Ergebnisse zeigen, dass die erfindungsgemäßen Polyestersiloxane zu keiner oder einer sehr geringfügigen Reduktion der Transparenz führten, die Opazitätswerte also kaum oberhalb der Nullprobe lagen. Im Gegensatz dazu erhielt man im Fall des nichterfindungsgemäßen Polyestersiloxans lediglich ein eingetrübtes, nur noch transluzentes PMMA-Compound. Ein weiterer Vorteil der erfindungsgemäßen Beispiele ist der Erhalt der Vicat-Erweichungstemperatur im Vergleich zum Stand der Technik. Dadurch kann man es vermeiden, bei der Herstellung der Compounds mit PMMAs mit einer höheren Vicat-Erweichungstemperatur zu starten, die im Allgemeinen auf Basis höherer Molekulargewichte der verwendeten Polymethylmethacrylate oder einer besonderen Monomerauswahl erzeugt werden, aber dadurch auch häufig bei gleicher Spritztemperatur eine schlechtere Fließfähigkeit haben oder andere Nachteile, wie eine erhöhte Sprödigkeit, aufweisen. Solche Nachteile in den Eigenschaften und der Applikation können durch die erfindungsgemäßen Polyestersiloxane vermieden werden. Zu erwähnen ist darüber hinaus, dass die erfindungsgemäßen Polyestersiloxane auch in schwarz eingefärbten PMMA-Compounds die Wischbeständigkeit und Kratzfestigkeit verbesserten. Dies geschah mindestens auf dem Niveau des kommerziell erhältlichen, nichterfindungsgemäßen Polyestersiloxans PESO, wobei für die Kratzfestigkeit sogar eine Verbesserung gegenüber PES0 zu beobachten war, insbesondere bei den höheren Kräften von 7N und 10N. Interessanterweise wiesen auch die schwarz eingefärbten PMMA-Compounds eine verbesserte Wischbeständigkeit auf, derart dass sogar bei 500 Hüben keine oder nur eine leichte Beschädigung zu beobachten war. Dadurch können im Haushalts-, Elektronik- oder Automobilbereich höhere Ansprüche erfüllt werden. PES1, PES4 und PES8 stellen dabei besonders vorteilhafte erfindungsgemäße Spezies dar, die eine Kombination verschiedener gewünschter Eigenschaften besonders vorteilhaft zulassen.

*Ergebnisse für Polyamid-Zusammensetzungen:*

Die erfindungsgemäßen Polyestersiloxane PES1 bis PES8 sowie das nichterfindungsgemäße Polyestersiloxane PES0 wurden zusammen mit Polyamid 6 zu Compounds verarbeitet. Die Konzentration der Polyestersiloxane betrug dabei 2 Gew.-% für die Compounds PA0-A bis PA8-A und 3 Gew.-% für die Compounds PA1-B bis PA8-B. Es wurden Normstäbe für die Flammschutzprüfung mit einer Dicke von 1,5 mm und 3,0 mm hergestellt und jeweils 5 Stäbe geprüft. Es wurde notiert, welche der UL 94 Klassen V-0, V-1 und V-2 erreicht wurde und wie häufig sie erreicht wurde. Ziel ist das Erreichen von wenigstens 4xV-0 und 1xV-1, um das Compound sicher mit UL 94 V-0 bewerten zu können, 5xV-0 ist besonders vorteilhaft. Zusätzlich wurde eine CTI-Prüfung der Compounds PA0-A bis PA8-A vorgenommen und die Länge der Fließspiralen dieser Compounds ermittelt. Das E-Modul der Compounds PA0-A bis PA8-A wurde ebenfalls bestimmt. Die Ergebnisse sind in Tabelle 10 zusammengefasst.

Tabelle 10: Ergebnisse für Polyamid-Zusammensetzungen

| Additiv | PA Compound | | | | | |
|---|---|---|---|---|---|---|
| | Compound | UL94 1,5 mm | UL94 3,0 mm | E-Modul [MPa] | CTI [V] | Fließspiralen [cm] |
| | PA ohne Additiv | 1xV-0 4xV-1 | 3xV-0 2xV-1 | 3470 | 500 | 16,0 |
| PES0 | PA0-A | 1xV-0 4xV-1 | 3xV-0 2xV-1 | 3210 | 500 | 16,4 |
| PES1 | PA1-A | 3xV-0 2xV-1 | 5xV-0 | 3630 | 525 | |
| | PA1-B | 5xV-0 | | | 550 | |
| PES2 | PA2-A | 5xV-0 | 5xV-0 | 3620 | 550 | |
| | PA2-B | | | | | |
| PES3 | PA3-A | 3xV-0 2xV-1 | 5xV-0 | 3640 | 525 | 18,3 |
| | PA3-B | 5xV-0 | | | 550 | |
| PES4 | PA4-A | 3xV-0 2xV-1 | 5xV-0 | 3720 | 550 | |
| | PA4-B | | | | | |
| PES5 | PA5-A | 5xV-0 | | 3640 | 575 | |
| | PA5-B | | | | | |
| PES6 | PA6-A | 4xV-0 1xV-1 | | 3570 | 550 | 18,0 |
| | PA6-B | 5xV-0 | | | 575 | |
| PES7 | PA7-A | 5xV-0 | | 3680 | 525 | |
| | PA7-B | | | | | |

(fortgesetzt)

| Additiv | PA Compound | | | | | |
|---|---|---|---|---|---|---|
| | Compound | UL94 1,5 mm | UL94 3,0 mm | E-Modul [MPa] | CTI [V] | Fließspiralen [cm] |
| PES8 | PA8-A | 3xV-0 2xV-1 | | 3660 | 575 | 17,9 |
| | PA8-B | 5xV-0 | | | 575 | |

Die Ergebnisse zeigen deutliche Vorteile für die verzweigten Polyestersiloxane PES1 bis PES8. So konnte eine Verbesserung der Flammfestigkeit bereits bei 1,5 mm dicken Materialien beobachtet werden. Im Gegensatz dazu konnte eine Verbesserung der Flammfestigkeit im Falle des linearen Polyestersiloxans PES0 nicht einmal bei 3,0 mm dicken Materialien erzielt werden. Die Verwendung des linearen Polyestersiloxans PES0 hatte den zusätzlichen Nachteil, dass das E-Modul des Compounds und damit die mechanische Festigkeit reduziert wurde. Im Gegensatz dazu war im Falle der verzweigten Polyestersiloxane eine Erhöhung des E-Moduls, also Verbesserung der mechanischen Festigkeit zu beobachten. Die Verbesserung der Flammschutzeigenschaften wird im Falle der Polysiloxane PES1 bis PES8 auch anhand des erhöhten CTI-Wertes deutlich. Neben der verbesserten UL-94 Performanz im Falle der Polysiloxane PES1 bis PES8 zeigen sie auch verbesserte elektrische Eigenschaften. Dies ist in Kombination mit der mindestens gleich guten Mechanik (E-Modul), wie es die Nullprobe (PA ohne Additiv) zeigt, sehr vorteilhaft. Durch die gute Fließfähigkeit (der Schmelzflussindex ist um wenigstens 10% erhöht) sind daher auch dünnwandige, elektrische Bauteile realisierbar.

*Ergebnisse für thermoplastische Polyurethan-Zusammensetzungen:*

Die verzweigten Polyestersiloxane PES1 bis PES8 sowie das lineare Polyestersiloxan PES0 wurden zusammen mit TPU zu Compounds verarbeitet. Die Konzentration der Polyestersiloxane betrug dabei 1 Gew.-% für die Compounds TPU0-A bis TPU8-A und 2 Gew.-% für die Compounds TPU0-B bis TPU8-B. Es wurde die Opazität von Platten mit einer Dicke von 2 mm sowie von Folien mit einer Dicke von 0,5 mm bestimmt. Das lineare Polyestersiloxan PES0 führte bei einer Konzentration von 2 Gew.-% zu so einer starken Trübung, dass eine Messung der Opazität nicht mehr sinnvoll war. Des Weiteren wurde das Reibungsverhalten (COF) untersucht und die Scheuerbeständigkeit mittels Crockmaster bestimmt. Die Ergebnisse sind in Tabelle 11 zusammengefasst.

Tabelle 11: Ergebnisse für thermoplastische Polyurethan-Zusammensetzungen

| Additiv | TPU | | | | | | | |
|---|---|---|---|---|---|---|---|---|
| | Compound | Opazität 2mm Platten | Opazität 0,5mm Folie | Crockmaster | | | COF 2N gegen Metall | Graph Typ 1, 2 oder 3 |
| | | | | 25 Hübe | 50 Hübe | 100 Hübe | | |
| | TPU ohne Additiv | 17,55% | 16,28% | leicht sichtbar | leicht sichtbar | sichtbar | 1,45 | 1 |
| PES0 | TPU0-B | 46,21% | 39,08% | leicht sichtbar | leicht sichtbar | sichtbar | 1,39 | 1 |
| PES1 | TPU1-A | | | | | | | |
| | TPU1-B | | | | | | | |
| PES2 | TPU2-A | | | | | | 0,81 | 3 |
| | TPU2-B | | | | | | 0,55 | 3 |
| PES3 | TPU3-A | | | | | | | |
| | TPU3-B | | | | | | | |
| PES4 | TPU4-A | 24,61% | 20,29% | leicht sichtbar | leicht sichtbar | leicht sichtbar | 0,84 | 3 |
| | TPU4-B | 28,35% | 22,68% | nicht sichtbar | leicht sichtbar | leicht sichtbar | 0,61 | 3 |
| PES5 | TPU5-A | | | | | | | |
| | TPU5-B | | | | | | | |

(fortgesetzt)

| Additiv | TPU | | | | | | | |
|---|---|---|---|---|---|---|---|---|
| | Compound | Opazität 2mm Platten | Opazität 0,5mm Folie | Crockmaster | | | COF 2N gegen Metall | Graph Typ 1, 2 oder 3 |
| | | | | 25 Hübe | 50 Hübe | 100 Hübe | | |
| PES6 | TPU6-A | 25,48% | 20,81% | leicht sichtbar | leicht sichtbar | leicht sichtbar | 1,05 | 2 |
| | TPU6-B | 27,35% | 21,22% | nicht sichtbar | leicht sichtbar | leicht sichtbar | 0,88 | 3 |
| PES7 | TPU7-A | | | | | | | |
| | TPU7-B | | | | | | | |
| PES8 | TPU8-A | 23,12% | 19,43% | nicht sichtbar | leicht sichtbar | leicht sichtbar | 0,68 | 2 |
| | TPU8-B | 26,18% | 20,63% | nicht sichtbar | leicht sichtbar | leicht sichtbar | 0,59 | 3 |

Die Ergebnisse verdeutlichen, dass die erfindungsgemäßen Polyestersiloxane PES1 bis PES8 transparent in TPUs einarbeitbar waren. Zudem konnte der Reibungskoeffizient deutlich reduziert werden. Die hohe Transparenz als auch das vorteilhafte Reibungsverhalten kann für medizinische Anwendungen von besonderer Bedeutung sein kann. An der Änderung des Graphentyps hin zum Typ 2 und sogar Typ 3 wird deutlich, dass die Klebrigkeit des Materials deutlich reduziert wurde. Dieses Eigenschaftsprofil (reduzierter COF, keine oder geringe Klebrigkeit, hohe Transparenz) in dünnen Schichten ist für unverzweigte lineare Strukturen nicht bekannt. Als zusätzlicher Vorteil der erfindungsgemäßen Zusammensetzungen konnte eine Verbesserung der Scheuerbeständigkeit festgestellt werden, was bei sich gegeneinander bewegenden Teilen in der Medizintechnik oder Automobilbereich wichtig für eine lange Lebenszeit der Bauteile ist.

## Patentansprüche

1. Kunststoffzusammensetzung umfassend

    - mindestens ein Kunststoffadditiv (A) ausgewählt aus polyestermodifizierten, verzweigten Organosiloxanen; und
    - mindestens einen Kunststoff (B).

2. Kunststoffzusammensetzung nach Anspruch 1, **dadurch gekennzeichnet, dass** das mindestens eine Kunststoffadditiv (A) ausgewählt ist aus Verbindungen der Formel (1),

    $$Mm\ D_d\ T_t\ Q_q \qquad \text{Formel (1);}$$

    mit

    $M = [R_3SiO_{1/2}]$;
    $D = [R_2SiO_{2/2}]$;
    $T = [RSiO_{3/2}]$;
    $Q = [SiO_{4/2}]$;
    worin

    R jeweils unabhängig voneinander ausgewählt ist aus der Gruppe bestehend aus $R^{(I)}$ und $R^{(II)}$; wobei $R^{(I)}$ jeweils unabhängig voneinander ausgewählt ist aus einbindigen Kohlenwasserstoffresten;
    $R^{(II)}$ jeweils unabhängig voneinander ausgewählt ist aus einbindigen organischen Resten, die jeweils einen oder mehrere Polyesterreste tragen;

    wobei weiterhin gilt:

$$m = 2+t+2*q \geq 3;$$

$$d \geq 0;$$

$$t \geq 0;$$

$$q \geq 0;$$

mit der Maßgabe, dass mindestens ein Rest $R^{(II)}$ enthalten ist.

**3.** Kunststoffzusammensetzung nach einem der Anspruch 1 oder 2, **dadurch gekennzeichnet, dass** das Kunststoffadditiv (A) ausgewählt ist aus Verbindungen der Formel (2),

$$M_m\, D_d\, T_t\, Q_q \qquad \text{Formel (2);}$$

mit

$M = [R_3SiO_{1/2}]$;
$D = [R_2SiO_{2/2}]$;
$T = [RSiO_{3/2}]$;
$Q = [SiO_{4/2}]$;
worin

R jeweils unabhängig voneinander ausgewählt ist aus der Gruppe bestehend aus $R^{(I)}$ und $R^{(II)}$ wobei
$R^{(I)}$ jeweils unabhängig voneinander ausgewählt ist aus einbindigen Kohlenwasserstoffresten;
$R^{(II)}$ jeweils unabhängig voneinander ausgewählt ist aus einbindigen organischen Resten, die jeweils einen oder mehrere Polyesterreste tragen; wobei weiterhin gilt:
$m = 2+t+2*q = 3$ bis 60, vorzugsweise 3 bis 20, insbesondere 3 bis 10;
d = 0 bis 120, vorzugsweise 10 bis 50, insbesondere 15 bis 40;
t = 0 bis 10, vorzugsweise 1 bis 7, insbesondere 1 bis 5;
q = 0 bis 10, vorzugsweise 0 bis 5, insbesondere 0 bis 1;

mit der Maßgabe, dass das Organosiloxan mindestens einen, vorzugsweise 2 bis 10, insbesondere 3 bis 7 Reste $R^{(II)}$ aufweist.

**4.** Kunststoffzusammensetzung nach mindestens einem der Ansprüche 1 bis 3, **dadurch gekennzeichnet, dass** das Kunststoffadditiv (A) ausgewählt ist aus Verbindungen der Formel (3),

$$M^1_{m1}M^2_{m2}D^1_{d1}D^2_{d2}T_tQ_q \qquad \text{Formel (3);}$$

mit

$M^1 = [R^1_3SiO_{1/2}]$;
$M^2 = [R^2R^1_2SiO_{1/2}]$;
$D^1 = [R^1_2SiO_{2/2}]$;
$D^2 = [R^1R^2SiO_{2/2}]$;
$T = [R^1SiO_{3/2}]$;
$Q = [SiO_{4/2}]$;
worin

$R^1$ jeweils unabhängig voneinander ausgewählt ist aus Kohlenwasserstoffresten mit 1 bis 30 Kohlenstoffatomen,
$R^2$ jeweils unabhängig voneinander ausgewählt ist aus einbindigen organischen Resten der Formel (4),
$-R^3-(O-R^4)_p$ Formel (4);

$R^3$ jeweils unabhängig voneinander ausgewählt ist aus (p+1)-bindigen organischen Resten mit 2 bis 10 Kohlenstoffatomen;
$R^4$ jeweils unabhängig voneinander ausgewählt ist aus einbindigen Polyesterresten mit 4 bis 1000 Kohlenstoffatomen,
m1 = 0 bis 30, vorzugsweise 0 bis 10, insbesondere 0 bis 3;
m2 = 0 bis 30, vorzugsweise 0 bis 10, insbesondere 0 bis 7;
d1 = 0 bis 100, vorzugsweise 10 bis 40, insbesondere 24 bis 34;
d2 = 0 bis 20, vorzugsweise 0 bis 10, insbesondere 0 bis 3;
t = 0 bis 10, vorzugsweise 1 bis 7, insbesondere 1 bis 5;
q = 0 bis 10, vorzugsweise 0 bis 5, insbesondere 0 bis 1;
p = 1 bis 4, vorzugsweise 1 bis 3, insbesondere 1 bis 2;

mit der Maßgabe, dass gilt:

m1+m2 = 2+t+2*q = 3 bis 60, vorzugsweise 3 bis 20, insbesondere 3 bis 10;
m2+d2 = mindestens 1, vorzugsweise 2 bis 10, insbesondere 3 bis 7.

**5.** Kunststoffzusammensetzung nach Anspruch 4, **dadurch gekennzeichnet, dass**

$R^4$ jeweils unabhängig voneinander ausgewählt ist aus Polyesterresten der Formeln (5a) oder (5b),

$-[(C{=}O)-R^5-O-]_kR^6$ Formel (5a),

$-[(C{=}O)-R1-(C{=}O)-O-R^5-O-]_{(k/2)}R^6$ Formel (5b),

wobei

$R^5$ jeweils unabhängig voneinander ausgewählt ist aus zweibindigen Kohlenwasserstoffresten mit 2 bis 10 Kohlenstoffatomen;
$R^6$ jeweils unabhängig voneinander ausgewählt ist aus der Gruppe bestehend aus H, Alkylresten mit 1 bis 4 Kohlenstoffatomen und Acylresten mit 1 bis 4 Kohlenstoffatomen;
k = 2 bis 50, vorzugsweise 4 bis 40, insbesondere 6 bis 30.

**6.** Kunststoffzusammensetzungen nach mindestens einem der Ansprüche 1 bis 5, **dadurch gekennzeichnet, dass** 5 % bis 50 %, vorzugsweise 5 % bis 40 %, insbesondere 5 % bis 25 % der Siliziumatome des Kunststoffadditivs (A) einen oder mehrere Polyesterreste tragen.

**7.** Kunststoffzusammensetzungen nach mindestens einem der Ansprüche 4 bis 6, **dadurch gekennzeichnet, dass** $R^3$ aus zwei Kohlenwasserstoffresten $R^{(a)}$ und $R^{(b)}$ sowie einem Sauerstoffatom besteht, wobei $R^{(a)}$ und $R^{(b)}$ über das Sauerstoffatom miteinander verbunden sind und wobei $R^{(a)}$ an ein Siliziumatom gebunden ist und $R^{(b)}$ nicht an ein Siliziumatom gebunden ist.

**8.** Kunststoffzusammensetzungen nach Anspruch 7, **dadurch gekennzeichnet, dass** $R^{(a)}$ ein gesättigter oder ungesättigter Kohlenwasserstoffrest mit 2 bis 4 Kohlenstoffatomen, vorzugsweise 2 bis 3 Kohlenstoffatomen ist und $R^{(b)}$ ein gesättigter Kohlenwasserstoff mit 1 bis 6 Kohlenstoffatomen, vorzugsweise 2 bis 6 Kohlenstoffatomen ist.

**9.** Kunststoffzusammensetzung nach mindestens einem der Ansprüche 1 bis 8, **dadurch gekennzeichnet, dass** der Massenanteil der Gesamtmenge aller Kunststoffadditive (A) von 0,02 % bis <50,00 %, vorzugsweise von 0,05 % bis 10,00 %, insbesondere von 0,10 % bis 5,00 % bezogen auf die Gesamtmasse der Kunststoffzusammensetzung beträgt.

**10.** Kunststoffzusammensetzung nach mindestens einem der Ansprüche 1 bis 9, **dadurch gekennzeichnet, dass** der mindestens eine Kunststoff (B) ausgewählt ist aus der Gruppe bestehend aus Thermoplasten und Duroplasten, vorzugsweise aus der Gruppe bestehend aus Thermoplasten.

**11.** Kunststoffzusammensetzung nach Anspruch 10, **dadurch gekennzeichnet,**

a) **dass** der Thermoplast ausgewählt ist aus der Gruppe bestehend aus Acrylnitril-Butadien-Styrol (ABS), Polyamid (PA), Polylactat (PLA), Poly(alkyl)(meth)acrylat, Polymethylmethacrylat (PMMA), Polycarbonat (PC), Polyethylenterephthalat (PET), Polyethylen (PE), Polypropylen (PP), Polystyrol (PS), Polyetheretherketon (PEEK), Polyvinylchlorid (PVC), und thermoplastischen Elastomeren (TPE), wobei die thermoplastischen Elastomere vorzugsweise ausgewählt sind aus der Gruppe bestehend aus thermoplastischen Polyamidelastomeren (TPA, TPE-A), thermoplastischen Copolyesterelastomeren (TPC, TPE-E), thermoplastischen Elastomeren auf Olefinbasis (TPO, TPE-O), thermoplastischen Styrol-Blockcopolymeren (TPS, TPES), thermoplastischen Polyurethanen (TPU), thermoplastischen Vulkanisaten (TPV, TPE-V) und vernetzten thermoplastischen Elastomeren auf Olefinbasis (TPV, TPE-V); und/oder
b) **dass** der Duroplast ausgewählt ist aus der Gruppe bestehend aus Diallylphthalat-Harzen (DAP), Epoxidharzen (EP), Harnstoff-Formaldehyd-Harzen (UF), Melamin-Formaldehyd-Harzen (MF), Melamin-Phenol-Formaldehyd-Harzen (MPF), Phenol-Formaldehyd-Harzen (PF), ungesättigten Polyesterharzen (UP), Vinylester-Harze und Polyurethanen (PU).

**12.** Kunststoffzusammensetzung nach mindestens einem der Ansprüche 1 bis 11, **dadurch gekennzeichnet, dass** der Massenanteil der Gesamtmenge aller Kunststoffe (B) von >50,00 % bis 99,98 %, vorzugsweise von 90,00 % bis 99,95 %, insbesondere von 95,00 % bis 99,90 % bezogen auf die Gesamtmasse der Kunststoffzusammensetzung beträgt.

**13.** Formmasse oder Formkörper enthaltend eine Kunststoffzusammensetzung nach mindestens einem der Ansprüche 1 bis 12.

**14.** Verwendung der Kunststoffzusammensetzung nach mindestens einem der Ansprüche 1 bis 13 oder der Formmasse oder des Formkörpers nach Anspruch 13

- zur Herstellung von dekorativen Abdeckblenden, Anbauteilen, Innenbauteilen oder Außenbauteilen in Kraftfahrzeugen, Booten, Flugzeugen, Windradflügeln, Unterhaltungselektronik sowie Haushaltgeräten und medizintechnischen Produkten;
- zur Herstellung von Küchen- oder Laborarbeitsflächen, Folien, Fasern, Profilleisten, Zierleisten, Kabeln;
- in Urformverfahren ausgewählt aus der Gruppe bestehend aus Urformen aus dem flüssigen Zustand und Urformen aus dem plastischen Zustand; vorzugsweise ausgewählt aus der Gruppe bestehend aus Schwerkraftgießen, Druckgießen, Niederdruckgießen, Schleudergießen, Tauchformen, Urformen von faserverstärkten Kunststoffen, Pressformen, Spritzgießen, Spritzpressen, Strangpressen, Extrudieren, Ziehformen, Kalandrieren, Blasformern und Modellieren;
- in Umformverfahren ausgewählt aus der Gruppe bestehend aus Tiefziehen und Thermoformen; oder
- im 3D-Druck.

**15.** Verwendung von Organosiloxanen definiert wie in einem der Ansprüche 1 bis 8 als Kunststoffadditiv.

## Claims

**1.** Plastics composition comprising

- at least one plastics additive (A) selected from polyester-modified, branched organosiloxanes; and
- at least one plastic (B).

**2.** Plastics composition according to Claim 1, **characterized in that** the at least one plastics additive (A) is selected from compounds of formula (1),

$$M_m\, D_d\, T_t\, Qq \qquad \text{formula (1);}$$

where

$M = [R_3SiO_{1/2}]$;
$D = [R_2SiO_{2/2}]$;
$T = [RSiO_{3/2}]$;
$Q = [SiO_{4/2}]$;

in which

R is in each case independently selected from the group consisting of $R^{(I)}$ and $R^{(II)}$; wherein
$R^{(I)}$ is in each case independently selected from monovalent hydrocarbon radicals;
$R^{(II)}$ is in each case independently selected from monovalent organic radicals each bearing one or more polyester radicals;

where in addition:

$$m = 2+t+2\times q \geq 3;$$

$$d \geq 0;$$

$$t \geq 0;$$

$$q \geq 0;$$

with the proviso that at least one radical $R^{(II)}$ is present.

3. Plastics composition according to either of Claims 1 and 2, **characterized in that** the plastics additive (A) is selected from compounds of formula (2),

$M_m\ D_d\ T_t\ Q_q$ formula (2);

where

$M = [R_3SiO_{1/2}]$;
$D = [R_2SiO_{2/2}]$;
$T = [RSiO_{3/2}]$;
$Q = [SiO_{4/2}]$;
in which

R is in each case independently selected from the group consisting of $R^{(I)}$ and $R^{(II)}$; wherein
$R^{(I)}$ is in each case independently selected from monovalent hydrocarbon radicals;
$R^{(II)}$ is in each case independently selected from monovalent organic radicals each bearing one or more polyester radicals; where in addition:
m = 2+t+2xq = 3 to 60, preferably 3 to 20, especially 3 to 10;
d = 0 to 120, preferably 10 to 50, especially 15 to 40;
t = 0 to 10, preferably 1 to 7, especially 1 to 5;
q = 0 to 10, preferably 0 to 5, especially 0 to 1;

with the proviso that the organosiloxane has at least one, preferably 2 to 10, especially 3 to 7 radicals $R^{(II)}$.

4. Plastics composition according to at least one of Claims 1 to 3, **characterized in that** the plastics additive (A) is selected from compounds of formula (3),

$M^1_{m1}M^2_{m2}D^1_{d1}D^2_{d2}T_tQ_q$ formula (3);

where

$M^1 = [R^1_3SiO_{1/2}]$;
$M^2 = [R^2R^1_2SiO_{1/2}]$;
$D^1 = [R^1_2SiO_{2/2}]$;
$D^2 = [R^1R^2SiO_{2/2}]$;

$T = [R^1SiO_{3/2}]$;
$Q = [SiO_{4/2}]$;
in which

$R^1$ is in each case independently selected from hydrocarbon radicals having 1 to 30 carbon atoms,
$R^2$ is in each case independently selected from monovalent organic radicals of formula (4), $-R^3-(O-R^4)_p$ formula (4);
$R^3$ is in each case independently selected from (p+1)-valent organic radicals having 2 to 10 carbon atoms;
$R^4$ is in each case independently selected from monovalent polyester radicals having 4 to 1000 carbon atoms,
m1 = 0 to 30, preferably 0 to 10, especially 0 to 3;
m2 = 0 to 30, preferably 0 to 10, especially 0 to 7;
d1 = 0 to 100, preferably 10 to 40, especially 24 to 34;
d2 = 0 to 20, preferably 0 to 10, especially 0 to 3;
t = 0 to 10, preferably 1 to 7, especially 1 to 5;
q = 0 to 10, preferably 0 to 5, especially 0 to 1;
p = 1 to 4, preferably 1 to 3, especially 1 to 2;

with the proviso that:

m1+m2 = 2+t+2xq = 3 to 60, preferably 3 to 20, especially 3 to 10;
m2+d2 = at least 1, preferably 2 to 10, especially 3 to 7.

**5.** Plastics composition according to Claim 4, **characterized in that**

$R^4$ is in each case independently selected from polyester radicals of formulae (5a) or (5b),

$-[(C=O)-R^5-O-]_kR^6$ formula (5a),

$-[(C=O)-R^5-(C=O)-O-R^5-O-]_{(k/2)}R^6$ formula (5b),

wherein

$R^5$ is in each case independently selected from divalent hydrocarbon radicals having 2 to 10 carbon atoms;
$R^6$ is in each case independently selected from the group consisting of H, alkyl radicals having 1 to 4 carbon atoms and acyl radicals having 1 to 4 carbon atoms;
k = 2 to 50, preferably 4 to 40, especially 6 to 30.

**6.** Plastics compositions according to at least one of Claims 1 to 5, **characterized in that** 5% to 50%, preferably 5% to 40%, especially 5% to 25% of the silicon atoms of the plastics additive (A) bear one or more polyester radicals.

**7.** Plastics compositions according to at least one of Claims 4 to 6, **characterized in that** $R^3$ consists of two hydrocarbon radicals $R^{(a)}$ and $R^{(b)}$ and also an oxygen atom, wherein $R^{(a)}$ and $R^{(b)}$ are joined to one another via the oxygen atom and wherein $R^{(a)}$ is bonded to a silicon atom and $R^{(b)}$ is not bonded to a silicon atom.

**8.** Plastics compositions according to Claim 7, **characterized in that** $R^{(a)}$ is a saturated or unsaturated hydrocarbon radical having 2 to 4 carbon atoms, preferably 2 to 3 carbon atoms, and $R^{(b)}$ is a saturated hydrocarbon having 1 to 6 carbon atoms, preferably 2 to 6 carbon atoms.

**9.** Plastics composition according to at least one of Claims 1 to 8, **characterized in that** the proportion by mass of the total amount of all plastics additives (A) is from 0.02% to <50.00%, preferably from 0.05% to 10.00%, especially from 0.10% to 5.00%, based on the total mass of the plastics composition.

**10.** Plastics composition according to at least one of Claims 1 to 9, **characterized in that** the at least one plastic (B) is selected from the group consisting of thermoplastics and thermosets, preferably from the group consisting of thermoplastics.

**11.** Plastics composition according to Claim 10, **characterized**

a) **in that** the thermoplastic is selected from the group consisting of acrylonitrile-butadienestyrene (ABS), polyamide (PA), polylactate (PLA), poly(alkyl) (meth)acrylate, polymethyl methacrylate (PMMA), polycarbonate (PC), polyethylene terephthalate (PET), polyethylene (PE), polypropylene (PP), polystyrene (PS), polyether ether ketone (PEEK), polyvinyl chloride (PVC), and thermoplastic elastomers (TPE), wherein the thermoplastic elastomers are preferably selected from the group consisting of thermoplastic polyamide elastomers (TPA, TPE-A), thermoplastic copolyester elastomers (TPC, TPE-E), thermoplastic elastomers based on olefins (TPO, TPE-O), thermoplastic styrene block copolymers (TPS, TPES), thermoplastic polyurethanes (TPU), thermoplastic vulcanizates (TPV, TPE-V) and crosslinked thermoplastic elastomers based on olefins (TPV, TPE-V); and/or
b) **in that** the thermoset is selected from the group consisting of diallyl phthalate resins (DAP), epoxy resins (EP), urea-formaldehyde resins (UF), melamine-formaldehyde resins (MF), melamine-phenol-formaldehyde resins (MPF), phenol-formaldehyde resins (PF), unsaturated polyester resins (UP), vinyl ester resins and polyurethanes (PU).

**12.** Plastics composition according to at least one of Claims 1 to 11, **characterized in that** the proportion by mass of the total amount of all plastics (B) is from >50.00% to 99.98%, preferably from 90.00% to 99.95%, especially from 95.00% to 99.90%, based on the total mass of the plastics composition.

**13.** Moulding compound or shaped body comprising a plastics composition according to at least one of Claims 1 to 12.

**14.** Use of the plastics composition according to at least one of Claims 1 to 13 or of the moulding compound or of the shaped body according to Claim 13

- for the production of decorative covering panels, add-on parts, interior components or exterior components in motor vehicles, boats, aircraft, wind turbine blades, consumer electronics and also household appliances and medical-technical products;
- for the production of kitchen or laboratory work surfaces, films, fibres, profile strips, decorative strips, cables;
- in primary forming processes selected from the group consisting of primary forming from the liquid state and primary forming from the plastic state; preferably selected from the group consisting of gravity casting, die casting, low-pressure casting, centrifugal casting, dip moulding, primary forming of fibre-reinforced plastics, compression moulding, injection moulding, transfer moulding, extrusion moulding, extrusion, drape forming, calendering, blow moulding and modelling;
- in shaping processes selected from the group consisting of deep drawing and thermoforming; or
- in 3D printing.

**15.** Use of organosiloxanes defined as in any of Claims 1 to 8 as plastics additive.

## Revendications

**1.** Composition de matériau synthétique comprenant

- au moins un additif synthétique (A) choisi parmi les organosiloxanes ramifiés, modifiés par polyester ; et
- au moins un matériau synthétique (B).

**2.** Composition de matériau synthétique selon la revendication 1, **caractérisée en ce que** ledit au moins un additif synthétique (A) est choisi parmi les composés de formule (1)

$$M_m D_d T_t Q_q \qquad \text{Formule (1) ;}$$

dans laquelle

M = $[R_3SiO_{1/2}]$ ;
D = $[R_2SiO_{2/2}]$ ;
T = $[RSiO_{3/2}]$ ;
Q = $[SiO_{4/2}]$ ;
où

R est choisi, à chaque fois indépendamment, dans le groupe constitué par $R^{(I)}$ et $R^{(II)}$ ;
où $R^{(I)}$ est choisi, à chaque fois indépendamment, parmi les radicaux hydrocarbonés monovalents ;
$R^{(II)}$ est choisi, à chaque fois indépendamment, parmi les radicaux organiques monovalents, qui portent à chaque fois un ou plusieurs radicaux polyester ;

où, en outre :

$$m = 2 + t + 2 * q \geq 3 ;$$

$$d \geq 0 ;$$

$$t \geq 0 ;$$

$$q \geq 0 ;$$

à condition qu'au moins un radical $R^{(II)}$ soit contenu,

**3.** Composition de matériau synthétique selon l'une quelconque des revendications 1 ou 2, **caractérisée en ce que** l'additif synthétique (A) est choisi parmi les composés de formule (2),

$M_m D_d T_t Q_q$ Formule (2) ;

dans laquelle

$M = [R_3SiO_{1/2}]$ ;
$D = [R_2SiO_{2/2}]$ ;
$T = [RSiO_{3/2}]$ ;
$Q = [SiO_{4/2}]$ ;
où

R est choisi, à chaque fois indépendamment, dans le groupe constitué par $R^{(I)}$ et $R^{(II)}$ ;
où $R^{(I)}$ est choisi, à chaque fois indépendamment, parmi les radicaux hydrocarbonés monovalents ;
$R^{(II)}$ est choisi, à chaque fois indépendamment, parmi les radicaux organiques monovalents, qui portent à chaque fois un ou plusieurs radicaux polyester ;
où, en outre :
m = 2 + t + 2 * q = 3 à 60, de préférence 3 à 20, en particulier 3 à 10 ;
d = 0 à 120, de préférence 10 à 50, en particulier 15 à 40 ;
t = 0 à 10, de préférence 1 à 7, en particulier 1 à 5 ;
q = 0 à 10, de préférence 0 à 5, en particulier 0 à 1 ;

à condition que l'organosiloxane présente au moins un, de préférence 2 à 10, en particulier 3 à 7 radicaux $R^{(II)}$.

**4.** Composition de matériau synthétique selon au moins l'une quelconque des revendications 1 à 3, **caractérisée en ce que** l'additif synthétique (A) est choisi parmi les composés de formule (3),

$M^1_{m1}M^2_{m2}D^1_{d1}D^2_{d2}T_tQ_q$ Formule (3) ;

dans laquelle

$M^1 = [R^1_3SiO_{1/2}]$,
$M^2 = [R^2R^1_2SiO_{1/2}]$,
$D^1 = [R^1_2SiO_{2/2}]$,
$D^2 = [R^1R^2SiO_{2/2}]$;
$T = [R^1SiO_{3/2}]$;

$Q = [SiO_{4/2}]$ ;
où

$R^1$ est choisi, à chaque fois indépendamment, parmi les radicaux hydrocarbonés comprenant 1 à 30 atomes de carbone ;
$R^2$ est choisi, à chaque fois indépendamment, parmi les radicaux organiques monovalents de formule (4), $-R^3-(O-R^4)_p$ Formule (4) ;
$R^3$ est choisi, à chaque fois indépendamment, parmi les radicaux organiques (p+1)-valents comprenant 2 à 10 atomes de carbone ;
$R^4$ est choisi, à chaque fois indépendamment, parmi les radicaux polyester monovalents comprenant 4 à 1000 atomes de carbone ;
m1 = 0 à 30, de préférence 0 à 10, en particulier 0 à 3 ;
m2 = 0 à 30, de préférence 0 à 10, en particulier 0 à 7 ;
d1 = 0 à 100, de préférence 10 à 40, en particulier 24 à 34 ;
d2 = 0 à 20, de préférence 0 à 10, en particulier 0 à 3 ;
t = 0 à 10, de préférence 1 à 7, en particulier 1 à 5 ;
q = 0 à 10, de préférence 0 à 5, en particulier 0 à 1 ;
p = 1 à 4, de préférence 1 à 3, en particulier 1 à 2 ;

à condition que

m1 + m2 = 2 + t + 2 * q = 3 à 60, de préférence 3 à 20, en particulier 3 à 10 ;
m2 + d2 = au moins 1, de préférence 2 à 10, en particulier 3 à 7.

**5.** Composition de matériau synthétique selon la revendication 4, **caractérisée en ce que**

$R^4$ est choisi, à chaque fois indépendamment, parmi les radicaux polyester des formules (5a) ou (5b),

$-[(C=O)-R^5-O-]_kR^6$ Formule (5a),

$-[(C=O)-R^5-(C=O)-O-R^5-O-]_{(k/2)}R^6$ Formule (5b),

où

$R^5$ est choisi, à chaque fois indépendamment, parmi les radicaux hydrocarbonés bivalents comprenant 2 à 10 atomes de carbone ;
$R^6$ est choisi, à chaque fois indépendamment, dans le groupe constitué par H, les radicaux alkyle comprenant 1 à 4 atomes de carbone et les radicaux acyle comprenant 1 à 4 atomes de carbone ;
k = 2 à 50, de préférence 4 à 40, en particulier 6 à 30.

**6.** Compositions de matériau synthétique selon au moins l'une quelconque des revendications 1 à 5, **caractérisées en ce que** 5% à 50%, de préférence 5% à 40%, en particulier 5% à 25% des atomes de silicium de l'additif synthétique (A) portent un ou plusieurs radicaux polyester.

**7.** Compositions de matériau synthétique selon au moins l'une quelconque des revendications 4 à 6, **caractérisées en ce que** $R^3$ est constitué par deux radicaux hydrocarbonés $R^{(a)}$ et $R^{(b)}$ ainsi que par un atome d'oxygène, $R^{(a)}$ et $R^{(b)}$ étant liés l'un à l'autre par l'intermédiaire de l'atome d'oxygène et $R^{(a)}$ étant lié à un atome de silicium et $R^{(b)}$ n'étant pas lié à un atome de silicium.

**8.** Compositions de matériau synthétique selon la revendication 7, **caractérisées en ce que** $R^{(a)}$ représente un radical hydrocarboné saturé ou insaturé comprenant 2 à 4 atomes de carbone, de préférence 2 à 3 atomes de carbone et $R^{(b)}$ représente un radical hydrocarboné saturé comprenant 1 à 6 atomes de carbone, de préférence 2 à 6 atomes de carbone.

**9.** Composition de matériau synthétique selon au moins l'une quelconque des revendications 1 à 8, **caractérisée en ce que** la proportion massique de la quantité totale de tous les additifs synthétiques (A) est de 0,02% à < 50,00%, de préférence de 0,05% à 10,00%, en particulier de 0,10% à 5,00% par rapport à la masse totale de la composition

de matériau synthétique.

**10.** Composition de matériau synthétique selon au moins l'une quelconque des revendications 1 à 9, **caractérisée en ce que** ledit au moins un matériau synthétique (B) est choisi dans le groupe constitué par les thermoplastiques et les thermodurcissables, de préférence dans le groupe constitué par les thermoplastiques.

**11.** Composition de matériau synthétique selon la revendication 10, **caractérisée**

a) **en ce que** le thermoplastique est choisi dans le groupe constitué par l'acrylonitrile-butadiène-styrène (ABS), le polyamide (PA), le polylactate (PLA), le poly((méth)acrylate (d'alkyle)), le poly(méthacrylate de méthyle) (PMMA), le polycarbonate (PC), le poly(téréphtalate d'éthylène) (PET), le polyéthylène (PE), le polypropylène (PP), le polystyrène (PS), la polyétheréthercétone (PEEK), le poly(chlorure de vinyle) (PVC) et les élastomères thermoplastiques (TPE), les élastomères thermoplastiques étant de préférence choisis dans le groupe constitué par les élastomères thermoplastiques de polyamide (TPA, TPE-A), les élastomères thermoplastiques de copolyester (TPC, TPE-E), les élastomères thermoplastiques à base d'oléfines (TPO, TPE-O), les copolymères thermoplastiques séquencés de styrène (TPS, TPES), les polyuréthanes thermoplastiques (TPU), les produits de vulcanisation thermoplastiques (TPV, TPE-V) et les élastomères thermoplastiques réticulés à base d'oléfines (TPV, TPE-V) ; et/ou
b) **en ce que** le thermodurcissable est choisi dans le groupe constitué par les résines de phtalate de diallyle (DAP), les résines époxyde (EP), les résines d'urée-formaldéhyde (UF), les résines de mélamine-formaldéhyde (MF), les résines de mélamine-phénol-formaldéhyde (MPF), les résines de phénolformaldéhyde (PF), les résines de polyester insaturées (UP), les résines d'ester de vinyle et les polyuréthanes (PU).

**12.** Composition de matériau synthétique selon au moins l'une quelconque des revendications 1 à 11, **caractérisée en ce que** la proportion massique de la quantité totale de tous les matériaux synthétiques (B) est de > 50,00% à 99,98%, de préférence de 90,00% à 99,95%, en particulier de 95,00% à 99,90% par rapport à la masse totale de la composition de matériau synthétique.

**13.** Masse de moulage ou corps moulé contenant une composition de matériau synthétique selon au moins l'une quelconque des revendications 1 à 12.

**14.** Utilisation de la composition de matériau synthétique selon au moins l'une quelconque des revendications 1 à 13 ou de la masse de moulage ou du corps moulé selon la revendication 13

- pour la fabrication de tôles de recouvrement décoratives, d'accessoires, de pièces intérieures ou de pièces extérieures dans des véhicules automobiles, des bateaux, des avions, des ailes d'éolienne, l'électronique grand public ainsi que les appareils domestiques et les produits médico-techniques ;
- pour la fabrication de surfaces de travail de cuisine ou de laboratoire, de feuilles, de fibres, de baguettes profilées, de baguettes décoratives, de câbles ;
- dans des procédés de moulage d'étalons, choisis dans le groupe constitué par le moulage d'étalons à partir de l'état liquide et à partir de l'état plastique ; de préférence choisis dans le groupe constitué par la coulée sous l'effet de la gravité, la coulée sous pression, la coulée sous basse pression, la coulée centrifuge, le moulage par immersion, le moulage d'étalons de matériaux synthétiques renforcés par des fibres, le moulage sous pression, le moulage par injection, le moulage par transfert, le filage à la presse, l'extrusion, le moulage par étirage, le calandrage, le moulage par soufflage, le modelage ;
- dans des procédés de façonnage choisis dans le groupe constitué par l'emboutissage et le thermoformage ; ou
- dans l'impression 3D.

**15.** Utilisation d'organosiloxanes tels que définis dans l'une quelconque des revendications 1 à 8 en tant qu'additif synthétique.

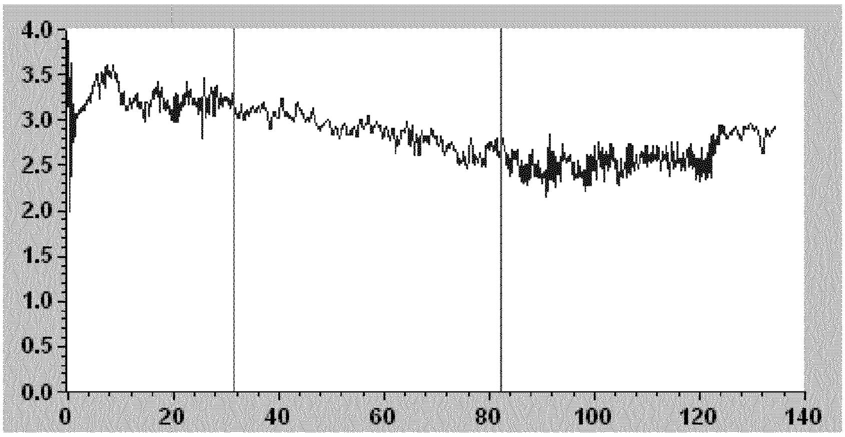


Fig. 1

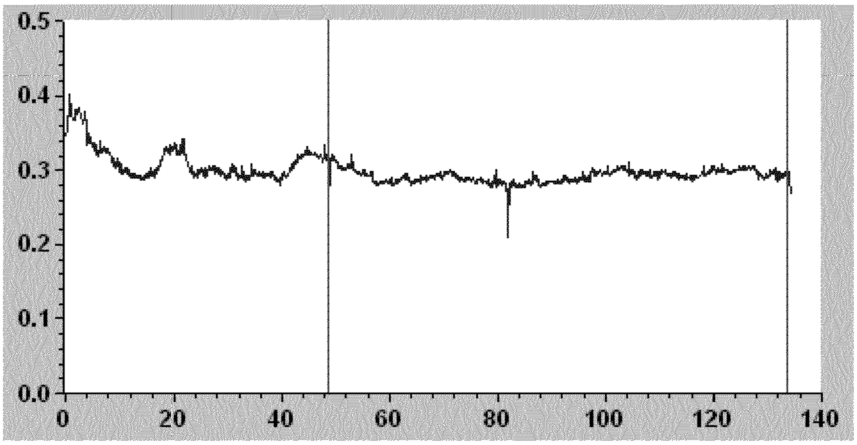


Fig. 2

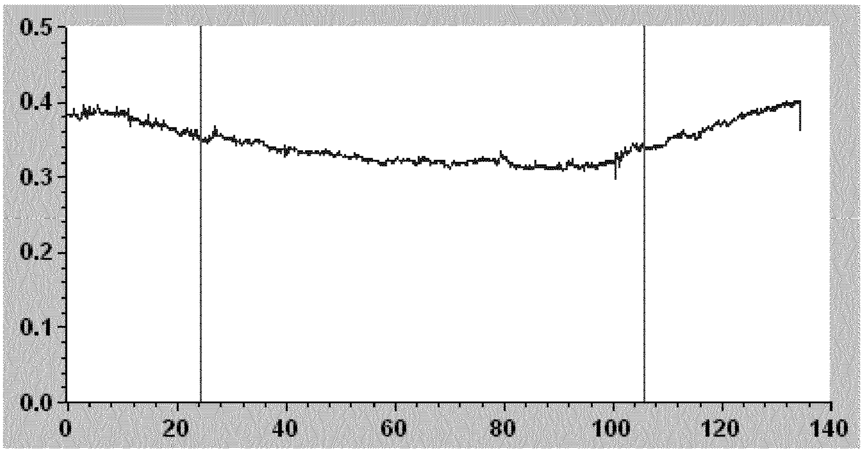


Fig.3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 8604072 A1
- EP 1640418 A1
- WO 2012034821 A1
- WO 2011129596 A1
- WO 2017191603 A
- WO 2009065644 A1
- EP 2176319 B1


### In der Beschreibung aufgeführte Nicht-Patentliteratur


- **W. NOLL.** Chemie und Technologie der Silicone. Verlag Chemie GmbH, 1960, 2
- **CARLOWITZ U. WIERER.** Kunststoffe (Merkblätter). Springer Verlag, 1987, 95
- **BECKER, G. W. ; BRAUN, D. ; WOEBCKEN, W.** Kunststoff-Handbuch. Hanser, 1988, vol. 10
- *Elias,* vol. 6, 1, , 7, , 476